# EUROPEAN PATENT APPLICATION

(11) **EP 4 063 135 A1**
(43) Date of publication of application: **28.09.2022**
(21) Application number: 22158289.3
(22) Date of filing: 23.02.2022
(51) Int. Cl.: B41J 3/39, G06F 3/12

(54) **PRINTING APPARATUS, INFORMATION PROCESSING SYSTEM, PRINTING METHOD, AND CARRIER MEANS**

(30) Priority: 22.03.2021 JP 2021046980
(71) Applicant: Ricoh Company, Ltd., Tokyo 143-8555 (JP)
(72) Inventor: TANAKA, Hiroki, Tokyo, 143-8555 (JP); SHIKAMA, Takeshi, Tokyo, 143-8555 (JP)
(74) Representative: SSM Sandmair

(57) **Abstract**

A printing apparatus (3) for printing print data on a recording medium includes a receiver (31), at least one accumulation receiver (3103), and a print executer (38). The receiver (31) receives at least one print job transmitted by an information processing apparatus that communicates with the printing apparatus (3). The at least one accumulation receiver (3103) is associated with the at least one print job received and accumulated. The print executer (38) prints a given print job of the at least one print job accumulated, in response to a print operation of the given print job. The print executer (38) stops the given print job from printing, in response to any one of the at least one accumulation receiver (3103) being operated while the given print job is in process of printing.

## Description

### BACKGROUND

### Technical Field

Embodiments of the present invention relate to a printing apparatus for printing print data on a recording medium, an information processing system, a printing method executed by the printing apparatus, and a carrier means carrying computer readable code for controlling a computer system to carry out the printing method.

### Related Art

Recent spread of compact laptop personal computers (PCs) and smart devices such as smartphones increases the need for image forming apparatuses that have been used so far to be compact and portable. In response to such need, a handheld printer has been put into practical use, as a downsized image forming apparatus without a sheet conveyance system. Specifically, the handheld printer is manually moved on a recording medium such as a sheet of paper to discharge ink.

Some of such handheld printers provide some technologies that a control panel serves as a mode switcher that switches between a fixed mode in which printing is performed according to print data set by an operator of the handheld printer to print a pattern set by the operator and a free mode in which printing is performed according to print data that is freely set regardless of the operator (e.g., see Japanese Unexamined Patent Application Publication No. H9-300715).

However, the related art has no idea of executing a print job instead of a current print job that is currently in the process of printing. In order to execute the job other than the current print job, in the related art, the operator has to wait for the current print job to be completed.

### SUMMARY

In view of the foregoing, advantageously, there is provided a printing apparatus according to claim 1. Advantageous embodiments are defined by the dependent claims. According to an embodiment of the present invention, the printing apparatus for printing print data on a recording medium includes a receiver, at least one accumulation receiver, and a print executer. The receiver receives at least one print job transmitted by an information processing apparatus that communicates with the printing apparatus. The at least one accumulation receiver is associated with the at least one print job received and accumulated. The print executer prints a given print job of the at least one print job accumulated, in response to a print operation of the given print job. The print executer stops the given print job from printing, in response to any one of the at least one accumulation receiver being operated while the given print job is in process of printing.

Accordingly, in a case where an operator or a user wants to execute a print job instead of a current print job that is currently in the process of printing, the operator or the user does not have to wait for the current print job to be completed.

Advantageously, there is also provided an information processing system according to claim 6. According to an embodiment of the present invention, the information processing system includes an information processing apparatus and a printing apparatus. The printing apparatus prints print data on a recording medium and communicates with the information processing apparatus. The printing apparatus includes a receiver, at least one accumulation receiver, and a print executer. The receiver receives at least one print job transmitted by the information processing apparatus. The at least one accumulation receiver is associated with the at least one print job received and accumulated. The print executer prints a given print job of the at least one print job accumulated, in response to a print operation of the given print job. The print executer stops the given print job from printing, in response to any one of the at least one accumulation receiver being operated while the given print job is in process of printing.

Accordingly, in a case where an operator or a user wants to execute a print job instead of a current print job that is currently in the process of printing, the operator or the user does not have to wait for the current print job to be completed.

Advantageously, there is also provided a printing method according to claim 7. According to an embodiment of the present invention, the printing method executed by a printing apparatus that prints print data on a recording medium includes receiving at least one print job transmitted by an information processing apparatus that communicates with the printing apparatus, receiving an operation on at least one accumulation receiver associated with the at least one print job received and accumulated, printing a given print job of the at least one print job accumulated, in response to a print operation of the given print job, and stopping the given print job from printing, in response to any one of the at least one accumulation receiver being operated while the given print job is in process of printing.

Accordingly, in a case where an operator or a user wants to execute a print job instead of a current print job that is currently in the process of printing, the operator or the user does not have to wait for the current print job to be completed.

Advantageously, there is also provided a carrier means according to claim 8.

According to an embodiment of the present invention, the carrier means carries computer readable code for controlling a computer system to carry out the printing method.

Accordingly, in a case where an operator or a user wants to execute a print job instead of a current print job that is currently in the process of printing, the operator or the user does not have to wait for the current print job to be completed.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram of an information processing system according to an embodiment;
FIG. 2 is a diagram illustrating an image of use of a handheld printer in the information processing system;
FIG. 3 is an illustration including a top view, a side view, and a bottom view of the handheld printer;
FIG. 4A is a diagram illustrating an example of coordinates of an origin in a head centre alignment;
FIG. 4B is a diagram illustrating an example of coordinates of a position of a navigation sensor in the head centre alignment of FIG. 4A;
FIG. 5A is a diagram illustrating an example of coordinates of an origin in an exterior-right alignment;
FIG. 5B is a diagram illustrating an example of coordinates of a position of the navigation sensor in the exterior-right alignment of FIG. 5A;
FIG. 6 is a diagram illustrating an example of the concept of an accumulated-printing function in the handheld printer;
FIG. 7 is a diagram illustrating an example of contents of an accumulated-job number and software processing;
FIG. 8 is a block diagram illustrating a hardware configuration of an information processor included in the information processing system;
FIG. 9 is a block diagram illustrating a hardware configuration of the handheld printer;
FIG. 10 is a diagram illustrating a hardware configuration of a controller included in the handheld printer;
FIG. 11 is a block diagram illustrating a functional configuration of the information processing system;
FIG. 12 is an illustration of a print job management table;
FIG. 13 is an illustration of an accumulated-job management table;
FIG. 14 is a sequence diagram illustrating a printing process performed by the handheld printer;
FIG. 15 is a sequence diagram illustrating an accumulated-job storing process;
FIG. 16 is a diagram illustrating a process of acquiring a list of job names related to accumulated jobs;
FIG. 17 is a sequence diagram illustrating an accumulated-job cancelling process at the time of accumulated printing;
FIG. 18 is a flowchart illustrating a process of determining whether to cancel an accumulated job;
FIG. 19 is an illustration of state transition in an accumulated-job printing process;
FIG. 20 is an illustration of state transition at the time of cancelling a job in a case where the number of accumulated jobs is one;
FIG. 21 is an illustration of state transition at the time of cancelling a job in a case where the number of accumulated jobs is two or more;
FIG. 22 is a diagram illustrating an example of buttons on the handheld printer;
FIG. 23 is a diagram illustrating an example of accumulation buttons on a liquid crystal screen on a handheld printer according to a modification; and
FIG. 24 is a diagram illustrating another example of accumulation button on the handheld printer according to the modification.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

For the sake of simplicity, like reference numerals are given to identical or corresponding constituent elements such as parts and materials having the same functions, and redundant descriptions thereof are omitted unless otherwise required.

As used herein, the term "connected/coupled" includes both direct connections and connections in which there are one or more intermediate connecting elements.

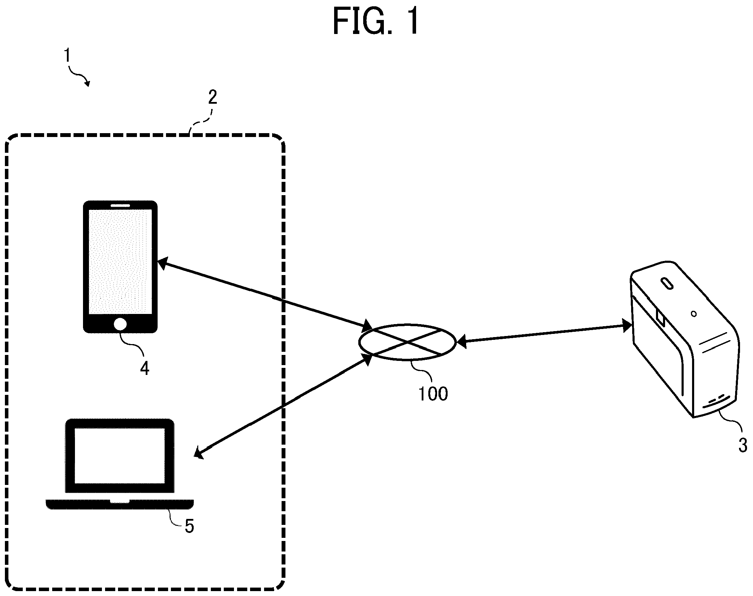

Referring now to FIGS. 1 to 22, a description is given of an embodiment.

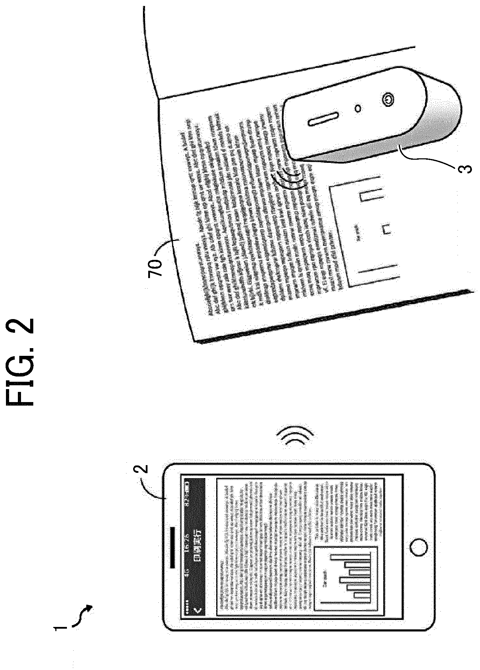

Initially with reference to FIGS. 1 and 2, a description is given of an information processing system.

FIG. 1 is a schematic diagram of an information processing system 1.

As illustrated in FIG. 1, the information processing system 1 includes an information processor 2 and a handheld printer 3, which serve as an information processing apparatus and a printing apparatus, respectively, according to the present embodiment. FIG. 2 is a diagram illustrating an image of use of the handheld printer 3 in the information processing system 1.

The information processor 2 includes a smartphone 4 and a laptop personal computer (PC) 5. The information processor 2 may further include a communication terminal such as a tablet terminal or a wearable terminal. The information processor 2 transmits print information (or image data) to be printed to the handheld printer 3 via a communication network 100. The information processor 2 and the handheld printer 3 may communicate with each other through Peer to Peer (P2P) connection.

The handheld printer 3 serves as a printing apparatus according to the present embodiment. In the present embodiment, a handheld printer is exemplified as the printing apparatus. The handheld printer 3 employs, e.g., an inkjet printing method as a printing method.

As illustrated in FIG. 2, a user holds the handheld printer 3 manually (i.e., in the hand or hands) and freely moves the handheld printer 3 on a recording medium 70 in a freehand scanning, to form an image on the recording medium 70 according to image data transmitted from the information processor 2. The recording medium 70 refers to various media having a flat or curved surface made of paper, wood, plastic, glass, or metal, for example. The printing method of the handheld printer 3 is not limited to the inkjet printing method. In another embodiment, the handheld printer 3 may employ a dot impact method or a thermal transfer method, for example. The printing apparatus is not limited to a handheld printer. The printing apparatus may be a self-propelled printing apparatus having a printing assembly mounted on a moving device to print an object of printing while moving under external control.

Each of the information processor 2 and the handheld printer 3 has a short-range wireless communication capability conforming to a given wireless communication standard such as infrared communication, Bluetooth^{®}, or Wi-Fi^{®} (in the following description, the registered sign will be omitted). The information processor 2 and the handheld printer 3 exchange information (or data) through such wireless communication. The information processor 2 and the handheld printer 3 are connected to each other through short-range wireless communication or a wired universal serial bus (USB) cable, for example. The communication network 100 is, e.g., the Internet, a mobile communication network, or a local area network (LAN). The communication network 100 may be a wired communication network or a wireless communication network such as the third generation (3G), the fourth generation (4G), the fifth generation (5G), Worldwide Interoperability for Microwave Access (WiMAX), or Long Term Evolution (LTE).

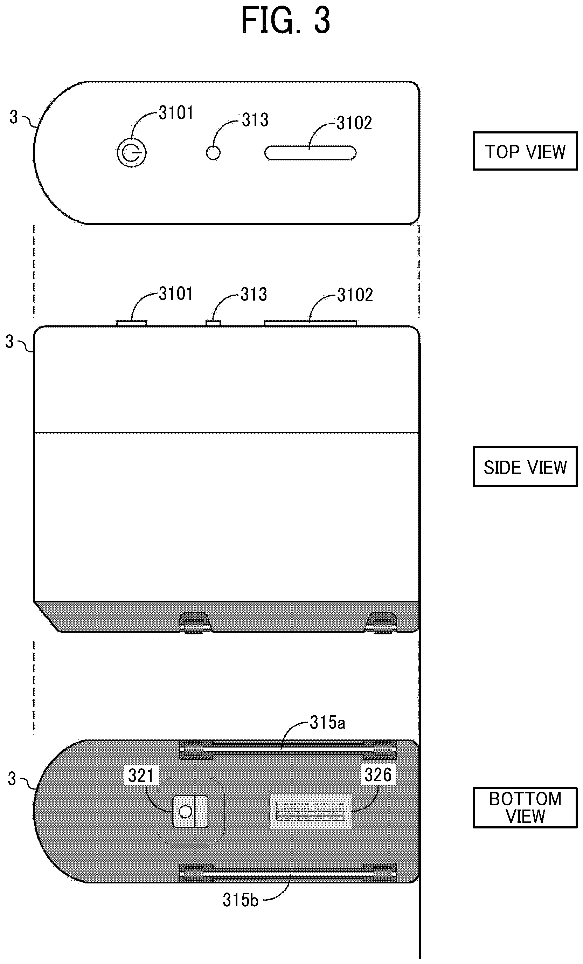

Referring now to FIG. 3, a description is given of a concept of an accumulated-printing function of a handheld printer.

FIG. 3 is an illustration including a top view, a side view, and a bottom view of the handheld printer 3.

As illustrated in FIG. 3, the handheld printer 3 includes a substantially cuboid housing. A top side of the housing is provided with a power button 3101, a light emitting diode (LED) 313, and a print button 3102. A bottom side of the housing, which faces the recording medium 70 during printing, is provided with guide rollers 315a and 315b, a navigation sensor 321, and a recording head unit 326. A gyro sensor, which will be described later, is mounted inside the housing. The recording head unit 326 serves as a recorder according to the present embodiment.

The navigation sensor 321 has a mechanism similar to a mechanism of an optical mouse to detect an amount of movement of the handheld printer 3. The navigation sensor 321 irradiates the recording medium 70 facing the navigation sensor 321 with light and captures the reflected light to calculate the amount of movement of the handheld printer 3, based on the difference in the acquired image data. Note that the amount of movement of the handheld printer 3 specifically refers to an amount of movement (ΔX, ΔY) of the position of the navigation sensor 321 in a two-dimensional orthogonal coordinate system, in which the X axis is parallel to a width direction of the bottom side of the housing of the handheld printer 3 and the Y axis is parallel to a longitudinal direction of the bottom side of the housing of the handheld printer 3. In the following direction, the two-dimensional orthogonal coordinate system may be referred to as a printer coordinate system.

The recording head unit 326 includes, as a recorder, a recording head that includes a plurality of nozzles (or nozzle rows). The recording head unit 326 discharges ink droplets from the nozzles to form a print image on the recording medium 70 facing the nozzles.

The guide rollers 315a and 315b serve as guides that allow the handheld printer 3 to smoothly move on the recording medium 70. The guide rollers 315a and 315b also serve as spacers that secure a sufficient gap between the nozzles of the recording head and the recording medium 70 for printing.

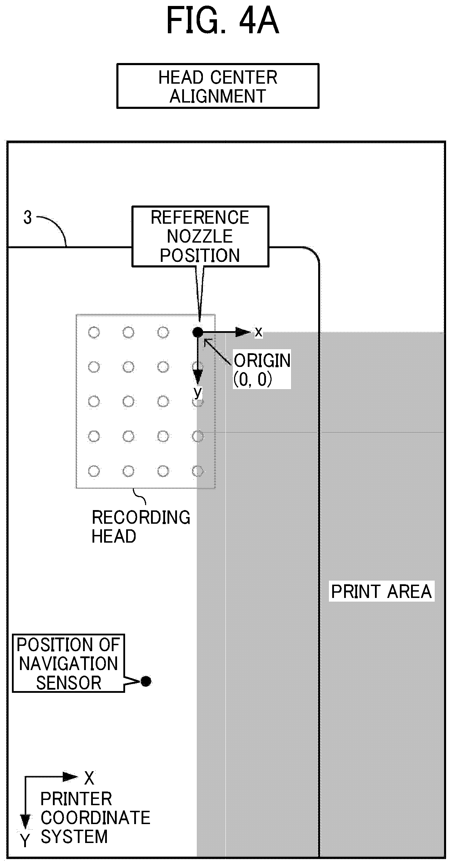

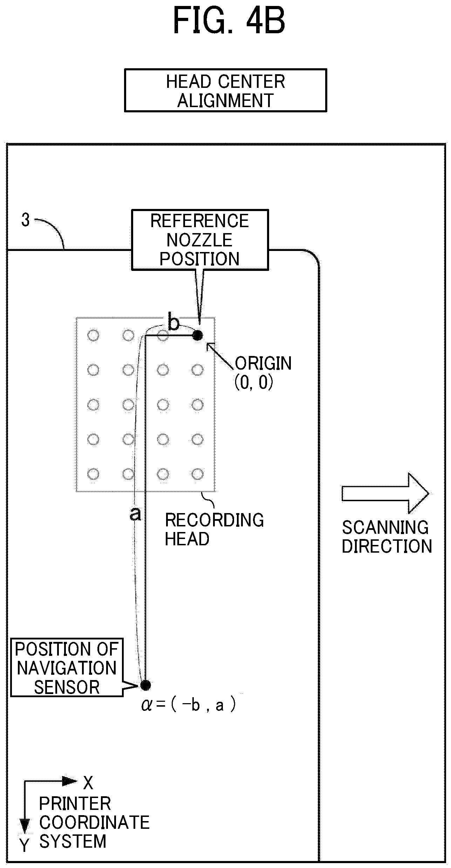

Referring now to FIGS. 4A and 4B, a description is given of setting an initial position for the handheld printer 3 to start printing.

FIG. 4A is a diagram illustrating an example of coordinates of an origin in a "head centre alignment." FIG. 4B is a diagram illustrating an example of coordinates of a position of the navigation sensor 321 in the "head centre alignment."

In the present embodiment, the initial position for the handheld printer 3 to start printing is set in each of three settings: "head centre alignment," "exterior-right alignment," and "exterior-left alignment." Specifically, the "exterior-right alignment" is set in a case where the handheld printer 3 moves on the recording medium 70 to the right. By contrast, the "exterior-left alignment" is set in a case where the handheld printer 3 moves on the recording medium 70 to the left. In the present embodiment, a detailed description is given of the "head centre alignment" and the "exterior-right alignment." In the following description, the coordinates of the position of the navigation sensor 321 in the "head centre alignment" may be referred to as a point α.

With continued reference to the diagrams illustrated in FIGS. 4A and 4B, a description is given of the point α set as the initial position of the navigation sensor 321 in the case of the "head centre alignment." In the present embodiment, in a case where a print start position to start printing is set to the "head centre alignment," a reference position for the handheld printer 3 to start printing is a reference nozzle position set in response to the print button 3102 being operated (e.g., pressed, touched, or tapped). The handheld printer 3 executes printing in a print area having the reference nozzle position as an origin. Note that the "reference nozzle position" herein refers to a position of a reference nozzle of the plurality of nozzles of the recording head unit 326.

As illustrated in FIG. 4A, the print area in the case of the "head centre alignment" refers to an area defined by a two-dimensional orthogonal coordinate system having the reference nozzle position as the origin (0, 0). The x and y axes of the two-dimensional orthogonal coordinate system respectively coincide with the X and Y axes of the printer coordinate system when the print button 3102 is operated.

In a case where the relative positions of the navigation sensor 321 and the reference nozzle are as illustrated in FIG. 4B, the printer coordinate system having the reference nozzle position as the origin (0, 0) specifies the point α of the navigation sensor 321 by (-b, a). In other words, in the case of the "head centre alignment" as in the example illustrated in FIG. 4B, the coordinates of the initial position of the navigation sensor 321 are set to (-b, a), thereby setting the reference nozzle position to the origin (0, 0) of the print area.

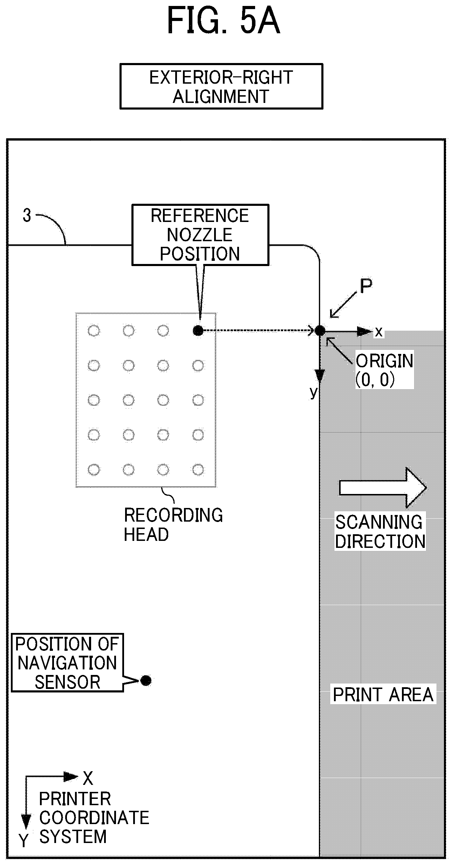

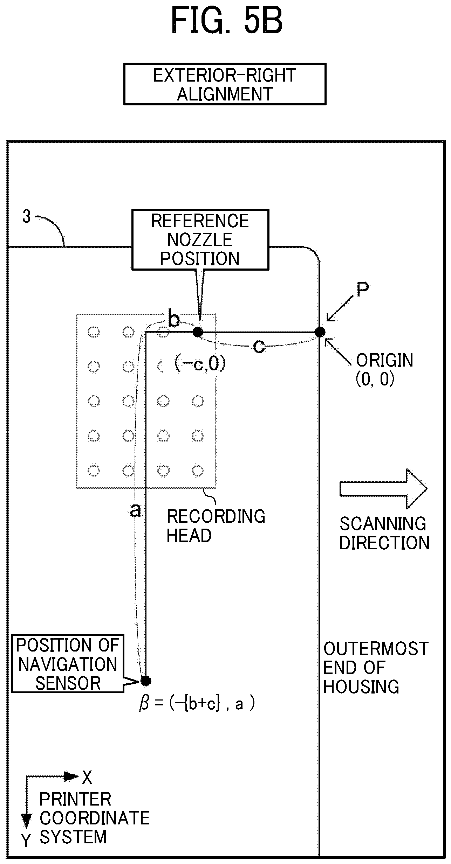

Referring now to FIGS. 5A and 5B, a description is given of coordinates of an initial position of the navigation sensor 321 in the case of the "exterior-right alignment."

FIG. 5A is a diagram illustrating an example of coordinates of an origin in the "exterior-right alignment." FIG. 5B is a diagram illustrating an example of coordinates of a position of the navigation sensor 321 in the "exterior-right alignment."

In the following description, the coordinates of the position of the navigation sensor 321 in the "exterior-right alignment" may be referred to as a point β. In the present embodiment, in a case where the print start position is set to the "exterior-right alignment," the reference position for the handheld printer 3 to start printing is the right end of the housing of the handheld printer 3. The handheld printer 3 executes printing in a print area having the right end of the housing of the handheld printer 3 as the origin.

In the case of the "exterior-right alignment," as illustrated in FIG. 5A, the print area refers to an area defined by a two-dimensional orthogonal coordinate system in which the origin (0, 0) is a position P at which a straight line extending from the reference nozzle position in a scanning direction along the X axis of the printer coordinate system intersects an outermost right end of the housing of the handheld printer 3. The x and y axes of the two-dimensional orthogonal coordinate system respectively coincide with the X and Y axes of the printer coordinate system when the print button 3102 is operated. In the following description, the housing of the handheld printer 3 may be simply referred to as the housing.

In a case where the relative positions of the navigation sensor 321 and the position P are as illustrated in FIG. 5B, the printer coordinate system having the point P as the origin (0, 0) specifies the point β of the navigation sensor 321 by (- {b + c}, a). In other words, in the case of the "exterior-right alignment" as in the example illustrated in FIG. 5B, the coordinates of the initial position of the navigation sensor 321 are set to (- {b + c}, a), thereby setting the position P (i.e., the position of the outermost right end of the housing) as the origin (0, 0) of the print area. In this case, a user may ascertain the print start position with reference to the right end of the housing of the handheld printer 3.

In the present embodiment, the print start position may be set to the "exterior-left alignment" in the same manner as the "exterior-right alignment" described above. In this case, the initial position of the navigation sensor 321 may be set, based on the relative positions of the navigation sensor 321 and a position P', such that the origin (0, 0) of a recording medium coordinate system coincides with the position P' at which the straight line extending from the reference nozzle position in the scanning direction of the handheld printer 3 intersects an outermost left end of the housing. In this case, a user may ascertain the print start position with reference to the left end of the housing of the handheld printer 3. The process described above is also applicable to a self-propelled printer in substantially the same manner.

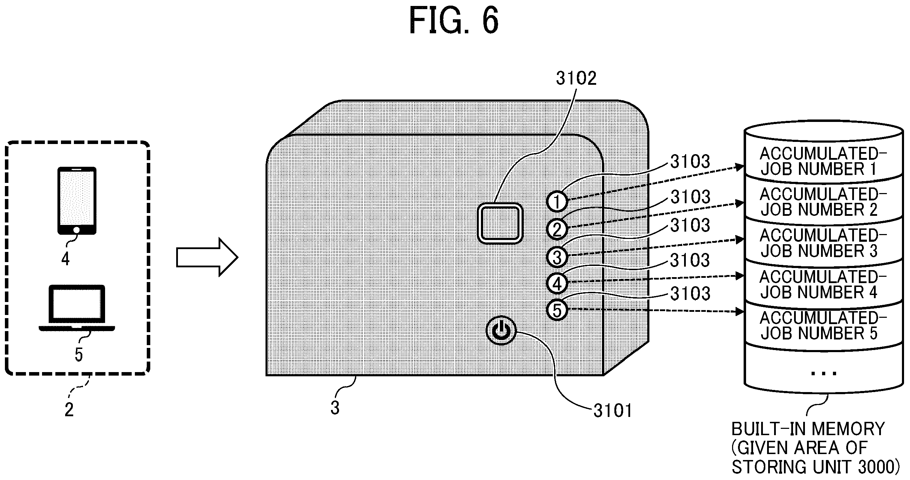

Referring now to FIG. 6, a description is given of the accumulated-printing function of a handheld printer.

FIG. 6 is a diagram illustrating an example of the concept of the accumulated-printing function of the handheld printer 3.

As illustrated in FIG. 6, the power button 3101, the print button 3102, and at least one accumulation button 3103 are disposed on the widest surface of the handheld printer 3 having a substantially cuboid shape. In the following description, the at least one accumulation button 3103 may be simply referred to as the accumulation button 3103 or the accumulation buttons 3103. The at least one accumulation button 3103 is at least one operation key or operation icon associated with at least one print job received from the information processor 2 and accumulated. The accumulation button 3103 corresponds to or is associated with an accumulated-job number allocated to a given area of a built-in memory (e.g., a storing unit 3000 described later) of the handheld printer 3. In FIG. 6, a given job transmitted from the information processor 2 is stored as an accumulated job to which a specific job number is assigned in a given area of the built-in memory by software processing described later. FIGS. 3 and 6 illustrate the buttons disposed on different surfaces of the handheld printer 3 for the sake of simplicity. In the present embodiment, from the viewpoint of operability and the body design, for example, the buttons have identical functions regardless of the surface on which the buttons are disposed. The accumulation button 3103 serves as an accumulation receiver according to the present embodiment.

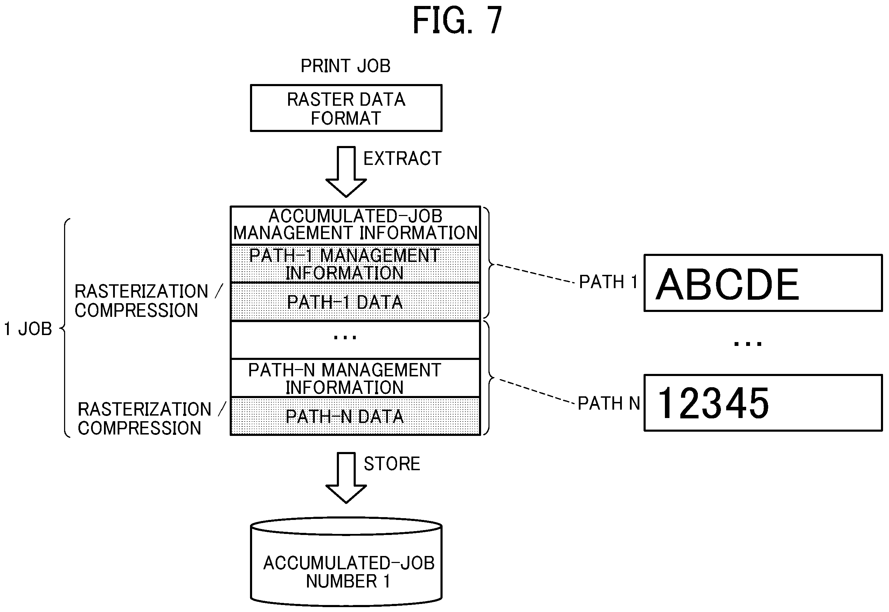

FIG. 7 is a diagram illustrating an example of contents of an accumulated-job number and the software processing.

As illustrated in FIG. 7, a specified accumulated-job number is added to a header of a command called Printer Job Language (PJL) when a print job represented in a raster data format is generated by a print application activated by the information processor 2. At this time, the print job includes PJL header information indicating the accumulated-job number, raster data, and PJL footer information. In response to the print job transmitted from the information processor 2, the handheld printer 3 opens an accumulated-job file in a corresponding given area of the built-in memory according to the accumulated-job number added to the PJL header. An example of the relationship between the accumulated-job number and the accumulated-job file is as follows:
Accumulated job number 1 corresponds to Accumulated job file [1],
Accumulated job number 2 corresponds to Accumulated job file [2],
Accumulated job number 3 corresponds to Accumulated job file [3],
Accumulated job number 4 corresponds to Accumulated job file [4], and
Accumulated job number 5 corresponds to Accumulated job file [5].

Subsequently, the handheld printer 3 analyses the raster data included in the print job and writes the print job into the corresponding accumulated-job file in a data format including accumulated-job management information and path-1 information to path-N information.

Now, a detailed description is given of the data format of the accumulated-job file.

One print job represented in the raster data format includes a plurality of pieces of path information on Path 1 to Path N described above. For example, Path 1 includes print information of "ABCDE." Path N includes print information of "12345." Specifically, "ABCDE" of Path 1 includes the accumulated-job management information for managing the number of the accumulated job, path-1 management information, and path-1 data. The print job in the raster data format is rasterized and compressed to obtain the "path-1 data." Similarly, "12345" of Path N includes the accumulated-job management information for managing the number of the accumulated job, path-N management information, and path-N data. The print job in the raster data format is rasterized and compressed to obtain the "path-N data." The print job including a plurality of paths thus obtained is stored in a given area of the built-in memory illustrated in FIG. 3 in association with an individual accumulated-job number.

Now, a description is given of hardware configurations.

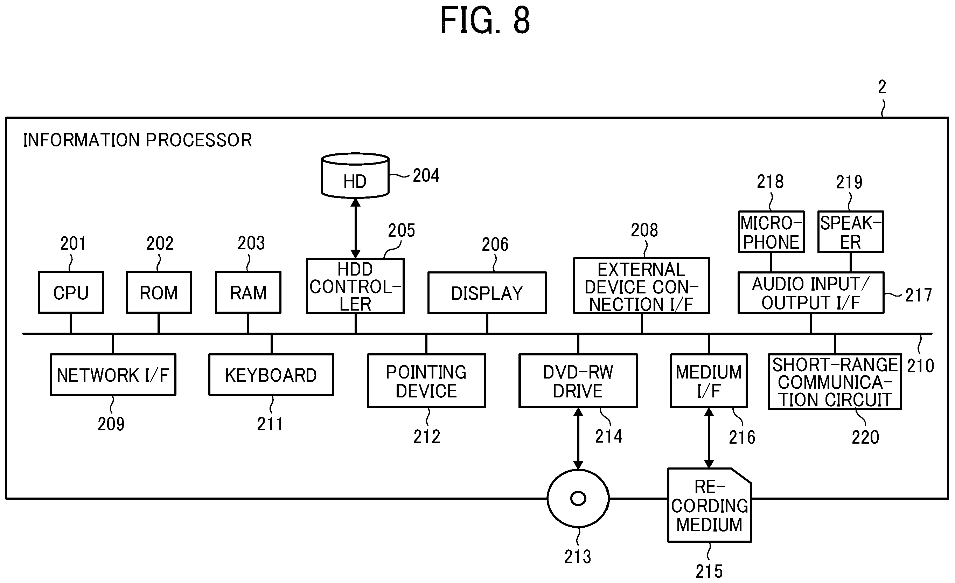

Initially with reference to FIG. 8, a description is given of a hardware configuration of the information processor 2.

FIG. 8 is a block diagram illustrating an example of the hardware configuration of the information processor 2.

The information processor 2 is, e.g., the smartphone 4 or the laptop PC 5. As illustrated in FIG. 8, the information processor 2 includes hardware resources such as a central processing unit (CPU) 201, a read only memory (ROM) 202, a random access memory (RAM) 203, a hard disk or hard drive (HD) 204, a hard disk drive (HDD) controller 205, a display 206, an external device connection interface (I/F) 208, a network I/F 209, a keyboard 211, a pointing device 212, a digital versatile disk rewritable (DVD-RW) drive 214, a medium I/F 216, an audio input/output I/F 217, a microphone 218, a speaker 219, a short-range communication circuit 220, and a bus line 210.

Among the components of the information processor 2 described above, the CPU 201 controls the operation of the information processor 2 as a whole. The ROM 202 stores programs that are used to boot the CPU 201. The RAM 203 is used as a work area for the CPU 201. The HD 204 stores various data such as programs. The HDD controller 205 controls reading or writing of various data from or to the HD 204 under control of the CPU 201.

The display 206 displays various kinds of information such as a cursor, a menu, a window, text, a numeric keypad, an execution key (or enter key) and an image. The display 206 serves as a display or a display device according to the present embodiment.

The external device connection I/F 208 is an interface that connects the information processor 2 to various external devices. An example of the external devices is a universal serial bus (USB) memory. The bus line 210 is, e.g., an address bus or a data bus to electrically connect the components such as the CPU 201.

The network I/F 209 is an interface that enables data communication through the communication network 100.

The keyboard 211 serves as an input device provided with a plurality of keys that allows, e.g., a user to input text (or characters), numerals, or various instructions. The pointing device 212 also serves as an input device that allows, e.g., a user to select or execute a specific instruction, select an object to be processed, or move a cursor. Note that the input device is not limited to the keyboard 211 or the pointing device 212. For example, the input device may be a touch panel or an audio input device.

The DVD-RW drive 214 controls reading or writing of various data from or to a DVD-RW 213 serving as a removable storage medium or carrier means according to the present embodiment. The removable storage medium is not limited to the DVD-RW 213 and may be a digital versatile disk recordable (DVD-R) or a Blu-Ray^{®} disc (in the following description, the registered sign will be omitted), for example. The medium I/F 216 controls reading or writing (i.e., storing) of data from or to a storage medium 215 such as a USB memory or a flash memory.

The microphone 218 is a kind of audio input device that receives voice or ambient sound as an audio signal. The speaker 219 is a kind of audio output device that outputs an output audio signal resulting from conversion of the input (i.e., received) audio signal. The audio input/output I/F 217 is a circuit that processes input and output of the audio signal between the microphone 218 and the speaker 219 under control of the CPU 201.

The short-range communication circuit 220 is a communication circuit that allows the information processor 2 to communicate with an external terminal (or an external device) by a short-range wireless communication technology such as a near field communication (NFC), Bluetooth, or Wi-Fi.

For the purpose of distribution, the programs may be stored in a computer-readable storage medium or carrier means in a file in an installable or executable format. Alternatively, the programs may be downloaded via a network in a file in an installable or executable format. Examples of the storage medium or carrier means include, but are not limited to, a compact disc recordable (CD-R), a digital versatile disk (DVD), a Blu-Ray disc, a secure digital (SD) card, and a USB memory. The storage medium or carrier means may be domestically or internationally provided as a program product. For example, the information processor 2 executes a program according to one or more embodiments of the present invention to implement an information processing method according to one or more embodiments of the present invention.

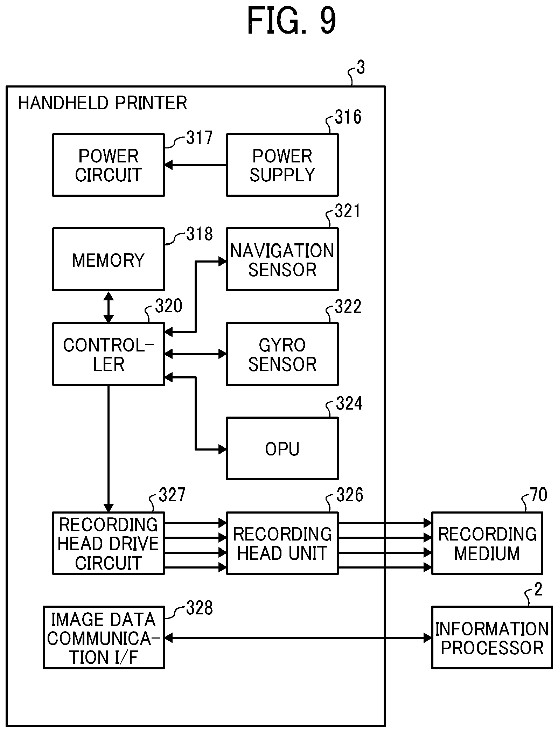

Referring now to FIG. 9, a description is given of a hardware configuration of the handheld printer 3.

FIG. 9 is a block diagram illustrating an example of the hardware configuration of the handheld printer 3.

As illustrated in FIG. 9, the handheld printer 3 includes, in the housing of the handheld printer 3, hardware resources such as a power supply 316, a power circuit 317, a memory 318, a controller 320, a gyro sensor 322, an operation unit or operation panel unit (OPU) 324, a recording head drive circuit 327, an image data communication I/F 328, and an operation button, in addition to the navigation sensor 321 and the recording head unit 326 described above.

The power supply 316 supplies power that is used by the handheld printer 3. The power supply 316 is, e.g., a secondary battery. The power circuit 317 controls power supply to each unit of the handheld printer 3.

The memory 318 is a storage device including a ROM and a dynamic random access memory (DRAM), for example. The ROM stores, e.g., programs that are executed to control the hardware of the handheld printer 3, drive waveform data that is used to drive the recording head, and data of initial setting information. The DRAM provides a program execution space and temporarily stores various data such as image data and the drive waveform data.

The controller 320 controls the handheld printer 3 as a whole. A detailed description of the controller 320 is deferred.

The gyro sensor 322 detects an angle of rotation of the handheld printer 3. The angle of rotation of the handheld printer 3 refers to an angle of rotation (Δθ) about an axis orthogonal to the printer coordinate system, which is a plane coordinate system. The handheld printer 3 of the present embodiment may have typical mechanical and electrical configurations, including the physical basic operation principles of the navigation sensor 321 and the gyro sensor 322, and detailed descriptions thereof are omitted.

The OPU 324 receives operations performed by a user. On the other hand, the OPU 324 notifies the user of the state of the handheld printer 3. In the present embodiment, the OPU 324 includes the power button 3101, the print button 3102, and the LED 313. In the present embodiment, the OPU 324 has a button-operated function. Alternatively, the OPU 324 may include a user interface (UI) that a user operates (e.g., taps) on a liquid display to perform various operations or settings.

The recording head drive circuit 327 controls the recording head of the recording head unit 326.

The image data communication I/F 328 is a data communication I/F conforming to a given wireless standard. The handheld printer 3 sends or receives various data (or information) to or from the information processor 2 via the image data communication I/F 328.

For the purpose of distribution, the programs may be stored in a computer-readable storage medium or carrier means in a file in an installable or executable format. Alternatively, the programs may be downloaded via a network in a file in an installable or executable format. Examples of the storage medium or carrier means include, but are not limited to, a CD-R, a DVD, a Blu-Ray disc, an SD card, and a USB memory. The storage medium or carrier means may be domestically or internationally provided as a program product. For example, the handheld printer 3 executes a program according to one or more embodiments of the present invention to implement a printing method according to one or more embodiments of the present invention.

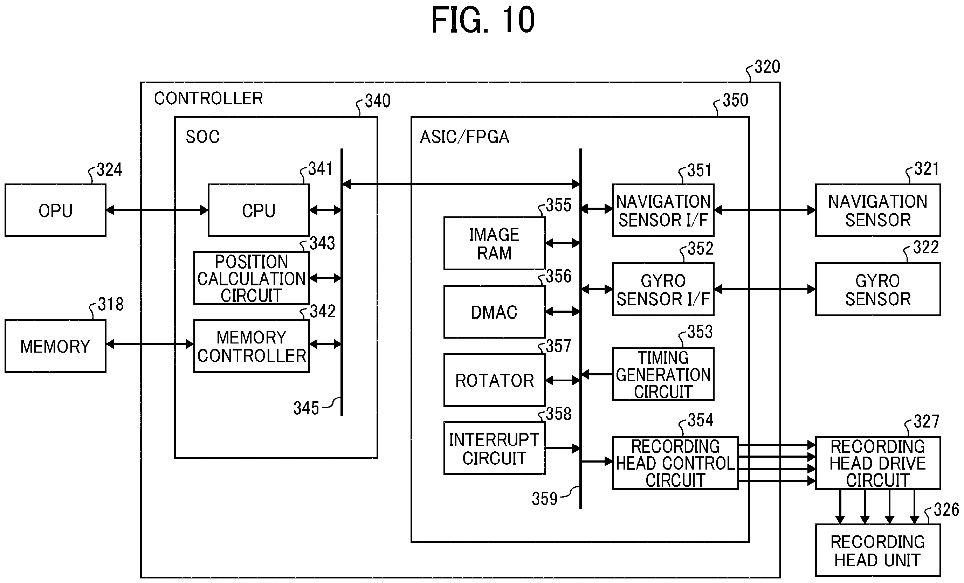

Referring now to FIG. 10, a description is given of a hardware configuration of the controller 320 of the handheld printer 3.

FIG. 10 is a diagram illustrating an example of the hardware configuration of the controller 320 of the handheld printer 3.

As illustrated in FIG. 10, the controller 320 includes hardware resources such as a system on a chip (SoC) 340 and an application-specific integrated circuit/field-programmable gate array (ASIC/FPGA) 350. The SoC 340 includes a CPU 341, a memory controller 342, and a position calculation circuit 343, which are connected to each other via a bus 345 for data communication.

The CPU 341 serves as a general controller (or circuitry) that controls the handheld printer 3 as a whole according to the present embodiment. The memory controller 342 servers as a memory controller (or circuitry) that controls the memory 318 according to the present embodiment.

The position calculation circuit 343 uses the amount of movement (ΔX, ΔY) detected by the navigation sensor 321 and the angle of rotation (Δθ) of the handheld printer 3 detected by the gyro sensor 322 to calculate the coordinates of the position of the navigation sensor 321 and calculate, based on the calculated coordinates of the position of the navigation sensor 321, the coordinates of the position of each nozzle of the recording head. Note that the position calculation circuit 343 serves as a position calculator according to the present embodiment.

The ASIC/FPGA 350 includes a navigation sensor I/F 351, a gyro sensor I/F 352, a timing generation circuit 353, a recording head control circuit 354, an image RAM 355, a direct memory access controller (DMAC) 356, a rotator 357, and an interrupt circuit 358, which are connected to each other via a bus 359 for data communication. The bus 359 is connected to the bus 345, thus allowing the SoC 340 and the ASIC/FPGA 350 to perform data communication with each other.

The navigation sensor I/F 351 performs data communication with the navigation sensor 321. The gyro sensor I/F 352 performs data communication with the gyro sensor 322.

The timing generation circuit 353 generates the time (or timing) when the navigation sensor I/F 351 reads an output value (ΔX, ΔY) of the navigation sensor 321, the time (or timing) when the gyro sensor I/F 352 reads an output value (Δθ) of the gyro sensor 322, and the time (or timing) when the recording head disposed in the recording head unit 326 discharges liquid droplets of, e.g., ink. The timing generation circuit 353 notifies the navigation sensor I/ F 351, the gyro sensor I/F 352, and the recording head control circuit 354 of the respective times (or timings) thus generated. The timing generation circuit 353 serves as a timing generator according to the present embodiment.

The recording head control circuit 354 causes the recording head drive circuit 327 to control a discharge operation of the recording head. Specifically, the recording head control circuit 354 transmits, to the recording head drive circuit 327, a control signal for controlling the discharge operation of the recording head and print image data (i.e., image data to be printed) at the time (or timing) designated by the timing generation circuit 353. The recording head control circuit 354 serves as a discharge controller (or circuitry) according to the present embodiment.

The image RAM 355 is a storage device (or memory) that temporarily stores image data retrieved by the DMAC 356.

Based on the coordinates of the positions of the nozzles calculated by the position calculation circuit 343, the DMAC 356 retrieves, as the image data, the data of an image to be formed by liquid droplets of, e.g., ink discharged from the nozzles, from the memory 318 via the memory controller 342 and the buses 345 and 359. The DMAC 356 then stores the image data in the image RAM 355.

The rotator 357 rotates image information (or image data) to be printed, according to at least one of the position and inclination of the recording head of the handheld printer 3. The rotator 357 acquires the image data from the image RAM 355 and rotates the image data according to at least one of the position and inclination of the recording head of the handheld printer 3. When the image data satisfies a given condition for discharging liquid droplets, the rotator 357 transmits the image data to the recording head control circuit 354. In the following description, the given condition for discharging the liquid droplets may be referred to as a discharge condition. The rotator 357 serves as a rotator or rotation device according to the present embodiment.

The interrupt circuit 358 transmits an interrupt signal to the SoC 340. The interrupt circuit 358 transmits, to the SoC 340, an interrupt signal providing information indicating that the navigation sensor I/F 351 has finished communication with the navigation sensor 321. The interrupt circuit 358 also transmits, to the SoC 340, an interrupt signal providing status information such as an error. The interrupt circuit 358 serves as an interrupter according to the present embodiment.

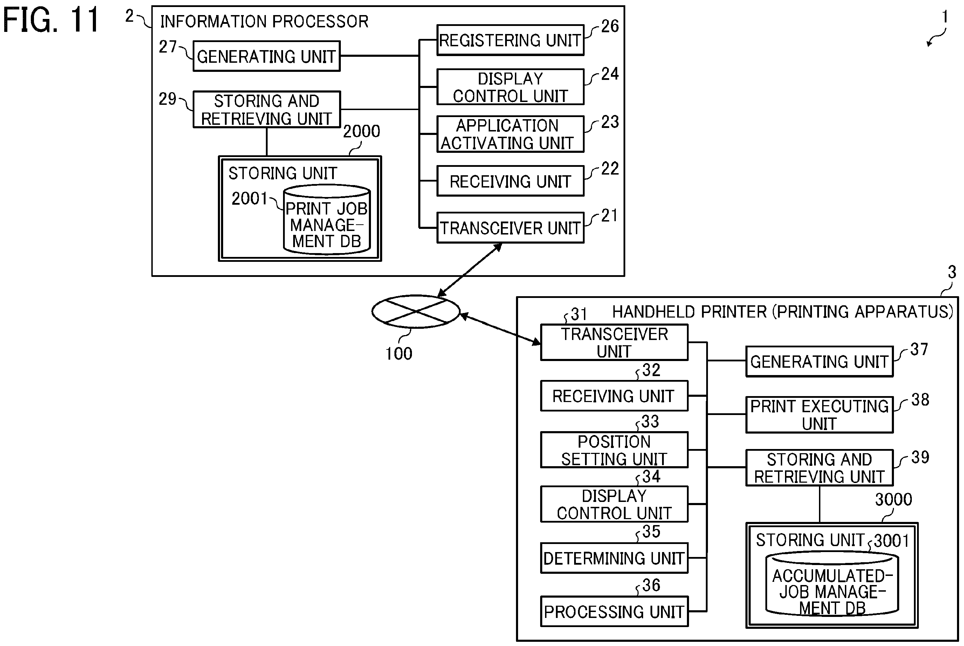

Referring now to FIGS. 11 to 13, a description is given of a functional configuration of the information processing system 1 according to the present embodiment.

Initially with reference to FIG. 11, a description is given of a functional configuration of the information processor 2.

FIG. 11 is a block diagram illustrating an example of the functional configuration of the information processing system 1.

As illustrated in FIG. 11, the information processor 2 includes, as functional units, a transceiver unit 21, a receiving unit 22, an application activating unit 23, a display control unit 24, a registering unit 26, a generating unit 27, and a storing and retrieving unit 29. Each of the functional units provides a function that is implemented by any of the hardware resources illustrated in FIG. 8 operating in response to an instruction from the CPU 201 according to a program for the information processor 2 loaded from at least one of the ROM 202 and the HD 204 into the RAM 203. The information processor 2 further includes a storing unit 2000 that is implemented by at least one of the ROM 202 and the HD 204 illustrated in FIG. 8. The storing unit 2000 stores a communication control program for allowing the information processor 2 to communicate with the handheld printer 3. A print application is installed in the storing unit 2000 for the information processor 2 to set a specific value related to printing to the handheld printer 3.

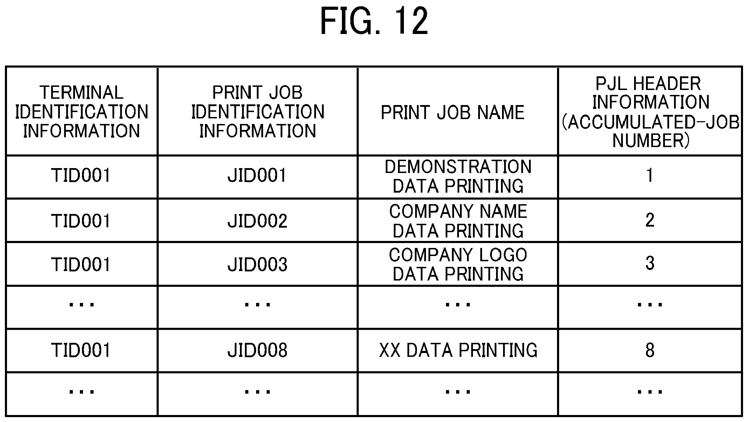

Referring now to FIG. 12, a description is given of a print job management table.

FIG. 12 is an illustration of an example of the print job management table.

The storing unit 2000 includes a print job management database (DB) 2001 that includes the print job management table illustrated in FIG. 12. In the print job management table, print job identification information, a print job name, and the PJL header information as an accumulated-job number are stored in association with each other for each piece of terminal identification information. Among the aforementioned kinds of information, the terminal identification information indicates identification information (or number) such as a serial number assigned to the information processor 2. For example, the terminal identification information is represented by, e.g., TID001 or TID002.

The print job identification information is stored to identify a print job. The print job identification information is represented by, e.g., JID001 or JID002 for each print job.

The print job name is a name representing a print job given on the print application activated by the information processor 2. The print job name is represented as a registered job name on an accumulated-printing setting screen. A detailed description of the accumulated-print setting screen is deferred. The print job name is represented by, e.g., demonstration data or a company name data.

The PJL header information is a specific accumulated-job number added to the PJL header when the print job in the raster data format is generated. The PJL header information is represented by, e.g., 1, 2, or 3.

As for the print job management table, for example, a system may be established to edit the print job management table by access to the information processor 2 from another apparatus via the communication network 100.

Referring back to FIG. 11, a detailed description is given of the functional configuration of the information processor 2.

The transceiver unit 21 of the information processor 2 illustrated in FIG. 11 is implemented mainly by the CPU 201 performing processing on the network I/F 209 and the short-range communication circuit 220 illustrated in FIG. 8. The transceiver unit 21 sends or receives image data and other kinds of information to or from the handheld printer 3 via the communication network 100. The transceiver unit 21 serves as at least one of a transmitter and a receiver according to the present embodiment.

The receiving unit 22 is implemented mainly by the CPU 201 processing various signals received from the keyboard 211 and the pointing device 212 illustrated in FIG. 8. The receiving unit 22 receives various operations performed by a user related to the printing with the handheld printer 3. In other words, the receiving unit 22 receives various kinds of information including information (i.e., signals) from the keyboard 211 and the pointing device 212 and information generated by input operations performed on the keyboard 211 and the pointing device 212. The receiving unit 22 serves as a receiver according to the present embodiment.

The display control unit 24 is implemented mainly by the CPU 201 performing processing on the display 206 illustrated in FIG. 8. The display control unit 24 performs display control of various data (or various kinds of information) on the display 206. The display control unit 24 serves as a display controller according to the present embodiment.

The registering unit 26 is implemented mainly by the CPU 201 illustrated in FIG. 8 performing processing. The registering unit 26 receives a registration operation performed by a user and registers at least one print job associated with the at least one accumulation button 3103. The registering unit 26 serves as a register according to the present embodiment.

The generating unit 27 is implemented mainly by the CPU 201 illustrated in FIG. 8 performing processing. According to various kinds of information registered by the registering unit 26, the generating unit 27 generates screen data that is displayed on the display 206 of the information processor 2. The generating unit 27 serves as a generator according to the present embodiment.

The storing and retrieving unit 29 is implemented mainly by the CPU 201 illustrated in FIG. 8 performing processing. The storing and retrieving unit 29 stores various data (or various kinds of information) in the storing unit 2000 or retrieves various data (or various kinds of information) from the storing unit 2000. The storing and retrieving unit 29 serves as a storer and a retriever according to the present embodiment.

With continued reference to FIG. 11, a description is given of a functional configuration of the handheld printer 3.

As illustrated in FIG. 11, the handheld printer 3 includes a transceiver unit 31, a receiving unit 32, a position setting unit 33, a display control unit 34, a determining unit 35, a processing unit 36, a generating unit 37, a print executing unit 38, and a storing and retrieving unit 39. Each of the functional units provides a function that is implemented by any of the hardware resources illustrated in FIGS. 9 and 10 operating in response to an instruction from the CPU 341 of the SoC 340 according to a program for the handheld printer 3 loaded from the memory 318 into the image RAM 355. In the following description, the CPU 341 of the SoC 340 may be simply referred to as the CPU 341. The handheld printer 3 further includes a storing unit 3000 that is implemented by a non-volatile area of, e.g., a ROM of the memory 318 illustrated in FIGS. 9 and 10. The storing unit 3000 stores a communication control program for allowing the handheld printer 3 to communicate with the information processor 2 and a print execution program for performing printing. The storing unit 3000 serves as a built-in memory according to the present embodiment.

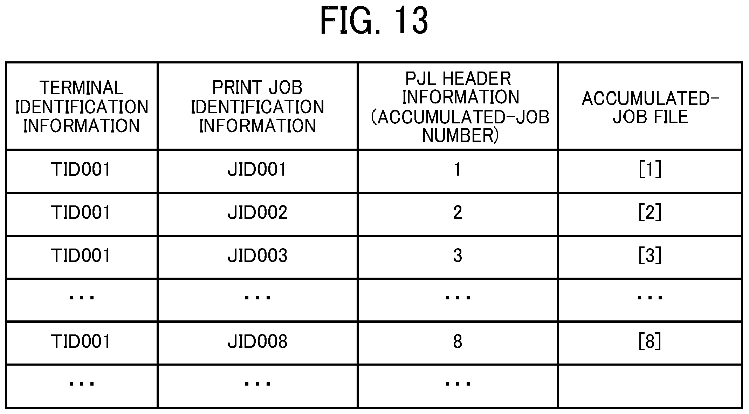

Referring now to FIG. 13, a description is given of an accumulated-job management table.

FIG. 13 is an illustration of an example of the accumulated-job management table.

The storing unit 3000 includes an accumulated-job management DB 3001 that includes the accumulated-job management table illustrated in FIG. 13. In the accumulated-job management table, the print job identification information, the PJL header information, and an accumulated-job file are stored in association with each other for each piece of terminal identification information. Among the aforementioned kinds of information, the accumulated-job file is a job file associated with the accumulated-job number (i.e., the PJL header information). The terminal identification information, the print job identification information, and the PJL header information are substantially the same as those stored in the print job management table described above, and detailed descriptions thereof are omitted.

Now, a detailed description is given of the functional configuration of the handheld printer 3.

The transceiver unit 31 of the handheld printer 3 illustrated in FIG. 11 is implemented mainly by the CPU 341 performing processing on the image data communication I/F 328 illustrated in FIG. 9. The transceiver unit 31 sends or receives various data (or various kinds of information) to or from the information processor 2 via the communication network 100. The transceiver unit 31 serves as at least one of a transmitter and a receiver according to the present embodiment.

The receiving unit 32 is implemented mainly by the CPU 341 processing various signals received from the OPU 324 illustrated in FIG. 9. The receiving unit 32 receives input operations such as a print start operation performed by a user. In other words, the receiving unit 22 receives various kinds of information including information (i.e., signals) from the OPU 324 and information generated by an input operation performed on the OPU 324. The receiving unit 32 serves as a receiver according to the present embodiment.

The position setting unit 33 is implemented mainly by the CPU 341 processing various output signals received from the navigation sensor 321 and the gyro sensor 322 illustrated in FIG. 9. The position setting unit 33 sets a physical current position of the handheld printer 3. The position setting unit 33 serves as a position setter according to the present embodiment.

The display control unit 34 is implemented mainly by the CPU 341 performing processing on the OPU 324 illustrated in FIG. 9. The display control unit 34 displays various kinds of information in the handheld printer 3 on the OPU 324. The display control unit 34 serves as a display controller according to the present embodiment.

The determining unit 35 is implemented mainly by the CPU 341 illustrated in FIG. 9 performing processing. The determining unit 35 performs various kinds of determination in the handheld printer 3. The determining unit 35 serves as a determiner according to the present embodiment.

The processing unit 36 is implemented mainly by the CPU 341 illustrated in FIG. 9 performing processing. The processing unit 36 analyses raster data corresponding to each of a plurality of accumulated jobs received, for example. The processing unit 36 also performs processing of retrieving an accumulated job stored in a given area of the built-in memory. The processing unit 36 serves as a processor according to the present embodiment.

The generating unit 37 is implemented mainly by the CPU 341 illustrated in FIG. 9 performing processing. The generating unit 37 generates data for each path of each print job stored as an accumulated job. The generating unit 37 serves as a generator according to the present embodiment.

The print executing unit 38 is implemented mainly by the CPU 341 performing processing on the recording head drive circuit 327 and the recording head unit 326 illustrated in FIG. 9. The print executing unit 38 executes a printing process of the handheld printer 3. The print executing unit 38 also performs control related to the state transition of the handheld printer 3 relative to printing. The print executing unit 38 serves as a print executer according to the present embodiment.

The storing and retrieving unit 39 is implemented mainly by the CPU 341 performing processing on the memory 318 illustrated in FIG. 9. The storing and retrieving unit 39 stores various data (or various kinds of information) in the storing unit 3000 or retrieves various data (or various kinds of information) from the storing unit 3000. The storing and retrieving unit 39 serves as a storer and a retriever according to the present embodiment.

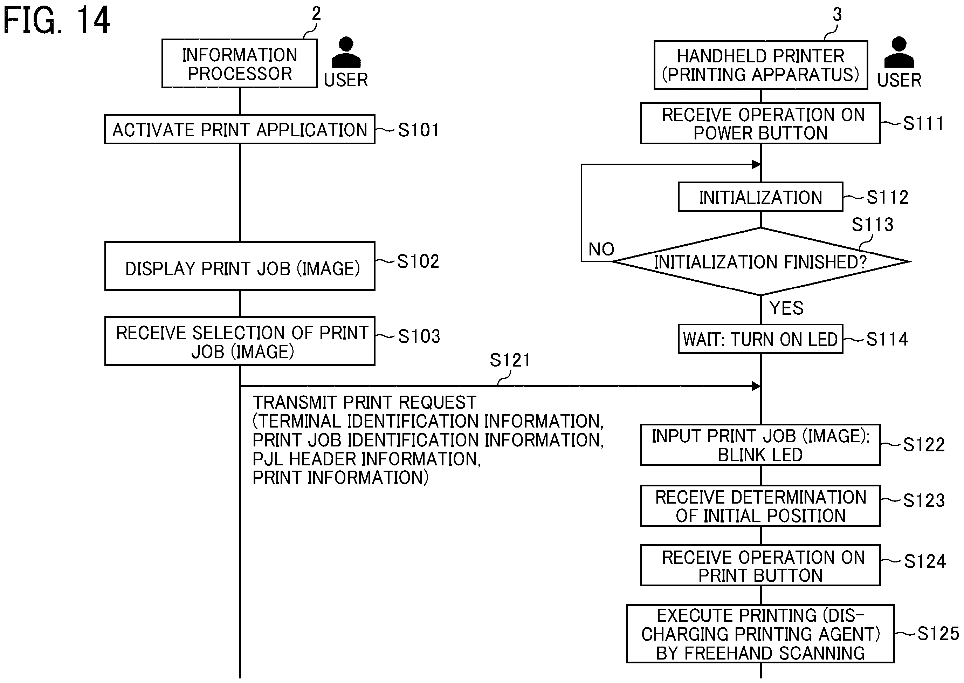

Referring now to FIGS. 14 to 21, a description is given of processes and operations in the information processing system 1.

Initially with reference to FIG. 14, a description is given of a printing process performed by the handheld printer 3.

FIG. 14 is a sequence diagram illustrating an example of the printing process performed by the handheld printer 3.

First, after executing login processing, a user of the information processor 2 performs an activation operation to activate a print application that operates on the information processor 2. In response to the activation operation, in step S101, the application activating unit 23 activates the print application installed in advance in the storing unit 2000.

Subsequently, in step S102, the display control unit 24 displays, on the display 206, e.g., at least one image representing the print information.

In step S103, the display control unit 24 receives selection of one of the at least one image from the user.

On the other hand, in step Sill, the handheld printer 3 receives an operation performed by the user on the power button 3101.

In response to the operation performed on the power button 3101, in step S112, the controller 320 (specifically, the SoC 340) of the handheld printer 3 is supplied with power to start initialization of the handheld printer 3.

In step S113, the determining unit 35 determines whether the initialization is finished. When the initialization is not finished (NO in step S113), the process returns to step S112. In other words, the initialization is continued. By contrast, when the initialization is finished (YES in step S113), in step S 114, the controller 320 (specifically, the SoC 340) turns on the LED 313 to notify the user that the handheld printer 3 is ready for printing.

Since the processing from step S101 to step S103 and the processing from step Sill to step S114 are performed asynchronously, either processing may be performed first. In the present example, the lighting of the LED 313 in step S114 serves as a guide to the next operation for the user.

After confirming the lighting of the LED 313, the user makes a print request to print the selected image with the information processor 2. In other words, in step S121, the transceiver unit 21 of the information processor 2 transmits the print request to the handheld printer 3. Accordingly, the transceiver unit 31 of the handheld printer 3 receives the print request transmitted by the information processor 2. The print request includes the terminal identification information, the print job identification information, the PJL header information, text data as print information, and image data of, e.g., Tag Image File Format (TIFF) or Joint Photographic Experts Group (JPEG).

After receiving the print request, in step S122, the print executing unit 38 inputs print job data (i.e., image data) acquired from the information included in the print request into a given area of the built-in memory of the handheld printer 3. While receiving the print request, the display control unit 34 blinks the LED 313 to notify the user that the handheld printer 3 is in the process of receiving the print request.

Now, a detailed description is given of the printing process.

Subsequently, in step S123, the receiving unit 32 of the handheld printer 3 receives an operation performed by the user to determine the initial position of the handheld printer 3 to start operation of the handheld printer 3. In other words, the position setting unit 33 acquires, from the navigation sensor 321 and the gyro sensor 322, the outputs varying as the handheld printer 3 is moved by the user and determines the position of the handheld printer 3. Specifically, the user places the handheld printer 3 at a desired position on the recording medium 70 subject to printing such as a sheet of paper and determines the desired position as the initial position of printing.

Note that in a case where the initial position at the time of starting printing is set to the "head centre alignment" of the recording head unit 326, the position setting unit 33 retrieves the point α retained in a given storage area of the storing unit 3000 as a value corresponding to the "head centre alignment" and sets the point α as the initial position of the navigation sensor 321.

In a case where the initial position at the time of starting printing is set to the "exterior-right alignment" of the recording head unit 326, the position setting unit 33 retrieves the point β retained in a given storage area of the storing unit 3000 as a value corresponding to the "exterior-right alignment" and sets the point β as the initial position of the navigation sensor 321. In a case where the initial position at the time of starting printing is set to the "exterior-left alignment" of the recording head unit 326, the position setting unit 33 retrieves coordinates of a position (e.g., a point γ) retained in a given storage area of the storing unit 3000 as a value corresponding to the "exterior-left alignment" and sets the point γ as the initial position of the navigation sensor 321.

In step S124, the receiving unit 32 receives an operation performed by the user on the print button 3102 of the handheld printer 3. In other words, in response to the print button 3102 being pressed, the navigation sensor 321 and the gyro sensor 322 start detecting the amount of movement (ΔX, ΔY) and the angle of rotation (Δθ), respectively. Relatedly, the CPU 341 executes an "initial position setting process" and stores the coordinates of the initial position of the navigation sensor 321 in the memory 318.

Now, a description is given of the internal processing in the handheld printer 3 up to the print start position.

After storing the initial position of the navigation sensor 321, the CPU 341 gives the navigation sensor I/F 351 an instruction to acquire the amount of movement (ΔX, ΔY) from the navigation sensor 321. Relatedly, the position setting unit 33 gives the gyro sensor I/F 352 an instruction to acquire the angle of rotation (Δθ) from the gyro sensor 322. In response to such instructions, the timing generation circuit 353 of the ASIC/FPGA 350 measures time with a counter. Accordingly, the navigation sensor I/F 351 and the gyro sensor I/F 352 wait for the arrival of an access time to access the navigation sensor 321 and the gyro sensor 322, respectively. The navigation sensor I/F 351 and the gyro sensor I/F 352 retrieve the amount of movement (ΔX, ΔY) and the angle of rotation (Δθ) from the internal memories of the navigation sensor 321 and the gyro sensor 322, respectively, each time the access time arrives.

The CPU 341 retrieves the amount of movement (ΔX, ΔY) and the angle of rotation (Δθ) from the navigation sensor I/F 351 and the gyro sensor I/F 352 of the ASIC/FPGA 350, respectively. Subsequently, the position setting unit 33 calculates the coordinates of the current position of the navigation sensor 321, based on the coordinates of the latest position of the navigation sensor 321 (in this case, (XS, YS)) stored in the memory 318 and the retrieved amount of movement (ΔX, ΔY) and angle of rotation (Δθ). The position setting unit 33 then stores the calculated coordinates in the memory 318.

The CPU 341 transmits the calculated coordinates of the current position of the navigation sensor 321 to the ASIC/FPGA 350. In response, the rotator 357 of the ASIC/FPGA 350 calculates coordinates of the position of each nozzle of the recording head from the relative positions of the navigation sensor 321 and the recording head unit 326.

The DMAC 356 of the ASIC/FPGA 350 retrieves image data around each nozzle from the memory 318, based on the positional information of each nozzle calculated, and transfers the image data to the image RAM 355.

In response, the rotator 357 rotates the image data stored in the image RAM 355, according to the position and inclination of the recording head specified by the CPU 341 at the time of initialization, to compare the rotated image data and the coordinates of the position of each nozzle and determines whether the discharge condition is satisfied.

When the discharge condition is satisfied, the rotator 357 transfers the image data to the recording head control circuit 354. In response, the recording head control circuit 354 causes the recording head drive circuit 327 to discharge ink from the nozzles of the recording head unit 326 onto the recording medium 70.

Thereafter, in step S125, the print executing unit 38 executes printing (i.e., discharging a printing agent) by freehand scanning. Note that, in a case where a print mode is set as described above, the print executing unit 38 may execute printing according to the set printing mode.

In the information processing system 1 according to the present embodiment, for example, when the processing of step S121 described above is executed, another device may be present between the information processor 2 and the handheld printer 3. In other words, each piece of information (or data) may be exchanged between the information processor 2 and the handheld printer 3 via another device. The configuration and the processing method described above may also be applied to other processing steps between the information processor 2 and the handheld printer 3.

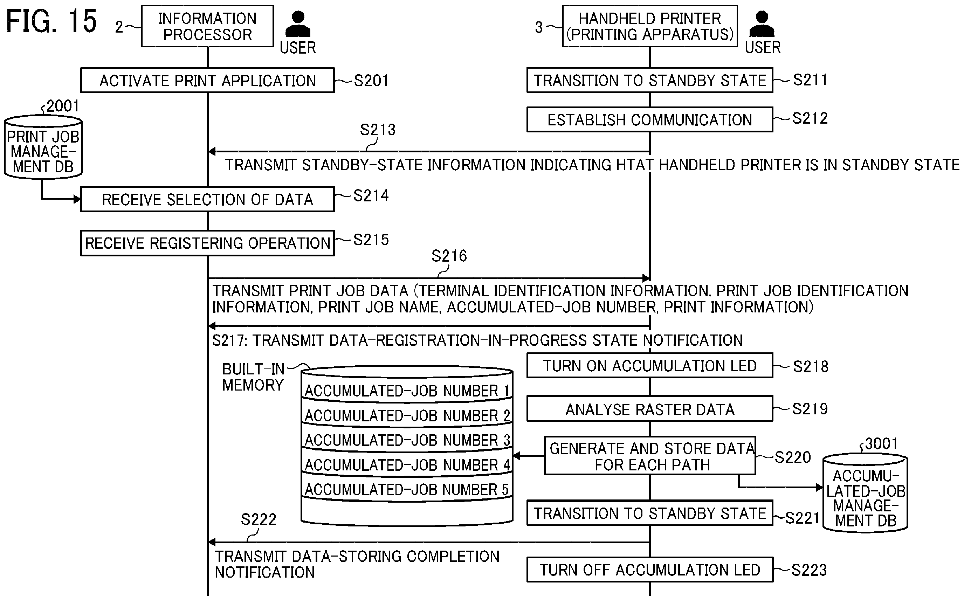

Referring now to FIG. 15, a description is given of an accumulated-job storing process.

FIG. 15 is a sequence diagram illustrating an example of the accumulated-job storing process.

As illustrated in FIG. 15, in step S201, a user of the information processor 2 activates the print application of the information processor 2.

On the other hand, in step S211, the handheld printer 3 that has already been turned on and completed the initialization transitions to a standby state.

In the standby state, in step S212, the transceiver unit 31 starts establishing communication between the handheld printer 3 and the information processor 2.

Specifically, first, in step S213, the transceiver unit 31 transmits standby state information to notify the information processor 2 that the handheld printer 3 is in the standby state. Accordingly, the transceiver unit 21 of the information processor 2 receives the standby state information transmitted by the handheld printer 3.

In step S214, the receiving unit 22 of the information processor 2 that has received the standby state information receives data selection (or a data selecting operation) performed by the user on a screen of the print application.

After receiving the data selection, in step S215, the registering unit 26 receives a registering operation performed by the user and registers at least one print job associated with the at least one accumulation button 3103.

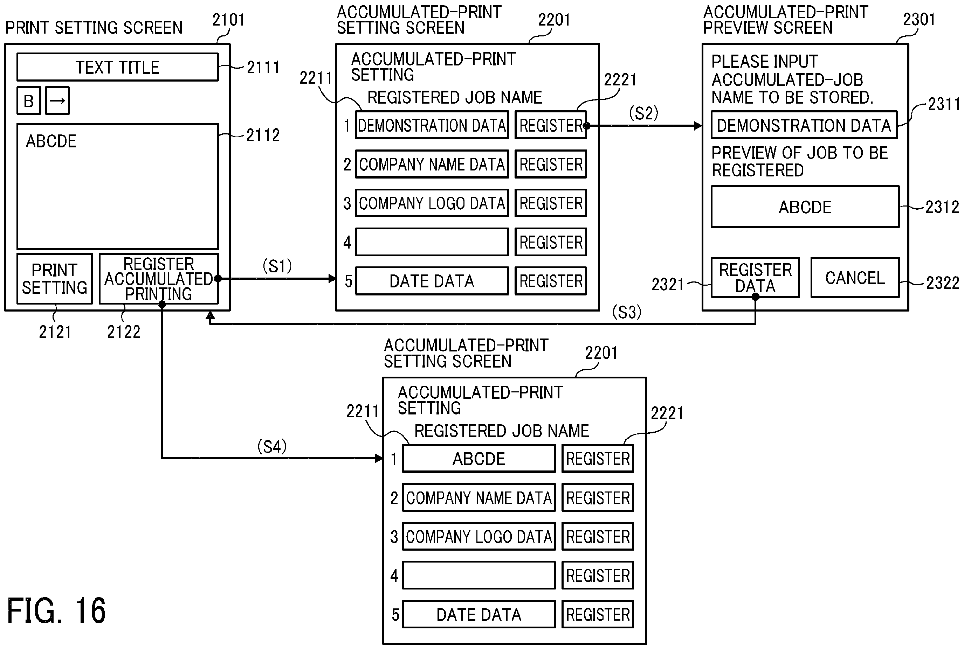

Referring now to FIG. 16, a description is given of data selection performed by the registering unit 26 and the display control unit 24 as a flow of acquiring a list of job names.

FIG. 16 is a diagram illustrating a process of acquiring a list of job names related to accumulated jobs.

As illustrated in FIG. 16, when the user starts the print application of the information processor 2, the print application displays, on the display 206, any one of a print setting screen 2101, an accumulated-print setting screen 2201, and an accumulated-print preview screen 2301 via the display control unit 24.

On the print setting screen 2101, for example, a text title display field 2111, a print information display field 2112, a print setting button 2121, and an accumulated-print registration button 2122 are displayed. In the print information display field 2112, the print information serving as print data is displayed. An example of the print information displayed in the print information display field 2112 is "ABCDE" stored as an accumulated job.

When the user operates (e.g., presses or taps) the accumulated-print registration button 2122 on the print setting screen 2101 displayed, the print application acquires a corresponding list of job names from a given area of the built-in memory. Then, in step S1, the print application switches the screen from the print setting screen 2101 to the accumulated-print setting screen 2201 in cooperation with the display control unit 24.

When the screen is switched to the accumulated-print setting screen 2201, the display control unit 24 displays a plurality of registered-job-name display fields 2211 and a plurality of registration buttons 2221 associated with the plurality of registered-job-name display fields 2211. Print job names stored in the print job management DB 2001 (see FIG. 12) are displayed in the plurality of registered-job-name display fields 2211. In this state, when the user operates the registration button 2221 corresponding to a selected one of the print job names, in step S2, the print application switches the screen from the accumulated-print setting screen 2201 to the accumulated-print preview screen 2301 via the display control unit 24. In the present example, the selected one of the print job names is "demonstration data" displayed as a first registered job name. The user performs a registration operation for the "demonstration data." In other words, the user operates the registration button 2221 to change the registered job name by overwriting, for example.

When the screen is switched to the accumulated-print preview screen 2301, the display control unit 24 displays an accumulated-job-name input field 2311 for a user to input an accumulated-job name to be stored, a registration job preview field 2312 for displaying the contents of the job to be registered, a data registration button 2321, and a cancel button 2322. In this state, when the user changes the accumulated-job name to be stored from "demonstration date" to "ABCDE" and operates the data registration button 2321, in step S3, the print application switches the screen to the print setting screen 2101 via the display control unit 24.

When the user operates the accumulated-print registration button 2122 after the print application executes the processing in step S3, in step S4, the print application switches the screen from the print setting screen 2101 to the accumulated-print setting screen 2201 again via the display control unit 24. At this time, in the registered-job-name display fields 2211, the job name "ABCDE" changed from "demonstration data" by the user is newly displayed as the first registered job name. As described above, the display control unit 24 displays, on the display 206, a screen including a print job name related to the at least one print job (accumulated job) registered by the registering unit 26 and a preview of a print job selected from the at least one print job. This allows the user to easily manage which print job is to be executed by the handheld printer 3.

Referring back to FIG. 15, a description is given of a registered job accumulation process.

After the aforementioned processing from step S1 to step S4, in step S216, the transceiver unit 21 of the information processor 2 transmits, to the handheld printer 3, the print job data related to the at least one print job registered by the registering unit 26. Accordingly, the transceiver unit 31 of the handheld printer 3 receives the print job data transmitted by the information processor 2. The print job data includes the terminal identification information, the print job identification information, the print job name, the accumulated-job number, and the print information serving as print data.

In response to the print job data, in step S217, the transceiver unit 31 of the handheld printer 3 transmits, to the information processor 2, a data-registration-in-progress state notification indicating that the handheld printer 3 is in the process of registering the received print job. Accordingly, the transceiver unit 21 of the information processor 2 receives the data-registration-in-progress state notification transmitted by the handheld printer 3.

Subsequently, in step S218, the display control unit 34 of the handheld printer 3 turns on an accumulation LED provided in the body of the handheld printer 3. The accumulation LED turned on at this time is, e.g., an LED provided as an outer edge of the accumulation button 3103 associated with the received job number among the accumulation buttons 3103 illustrated in FIG. 6.

Thereafter, in step S219, the processing unit 36 analyses the print data (i.e., raster data) received as the print information. After the raster data is analysed, in step S220, the generating unit 37 generates data for each path and stores the generated data in a given area of the built-in memory. In addition, the generating unit 37 may register the data for each path as an accumulated-job file corresponding to the print job identification information in the accumulated-job management DB 3001 (see FIG. 13).

After generating and storing the data for each path, in step S221, the print executing unit 38 causes the handheld printer 3 to transition to the standby state. In step S222, the transceiver unit 31 transmits, to the information processor 2, a data-storing completion notification indicating that the handheld printer 3 has stored the data. Accordingly, the transceiver unit 21 of the information processor 2 receives the data-storing completion notification transmitted by the handheld printer 3.

After transmitting the data-storing completion notification, in step S223, the display control unit 34 turns off the accumulation LED associated with the accumulated job.

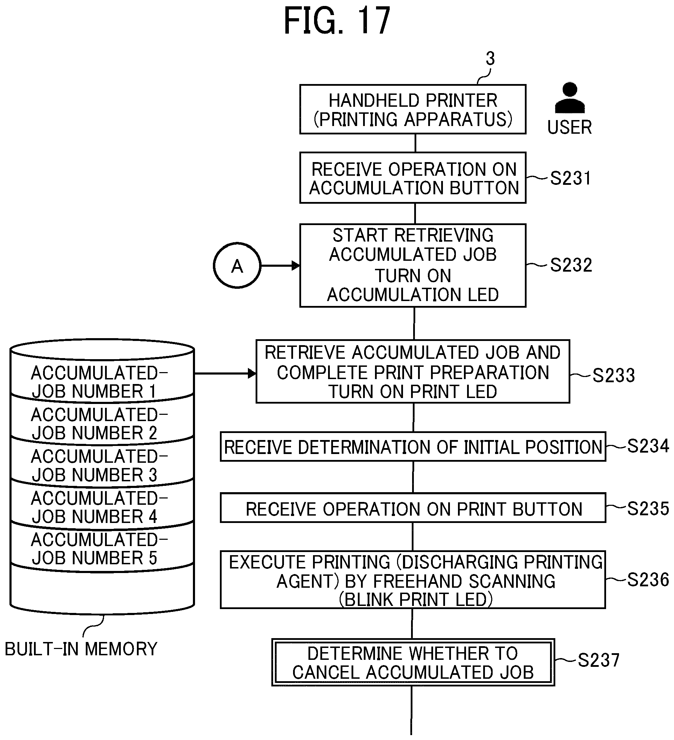

Referring now to FIG. 17, a description is given of job cancellation at the time of accumulated printing according to the present embodiment.

FIG. 17 is a sequence diagram illustrating an accumulated-job cancelling process at the time of accumulated printing.

When a print operation is performed for a given print job of at least one print job accumulated by the information processor 2, the given print job starts printing. FIG. 17 illustrates a sequence to stop the given print job from printing when any one of the accumulation buttons 3103 is operated while the given print job is in the process of printing.

First, in step S231, the receiving unit 32 of the handheld printer 3 receives an operation performed by a user on the accumulation button 3103 to execute a given accumulated job.

Subsequently, in step S232, the processing unit 36 starts retrieving the accumulated job associated with the accumulation button 3103 thus operated; whereas the display control unit 34 turns on the accumulation LED provided as the outer edge of the accumulation button 3103 associated with the accumulated job being retrieved.

Subsequently, in step S233, the processing unit 36 cooperates with the print executing unit 38 to retrieve the accumulated job stored in a given area of the built-in memory and completes the print preparation; whereas the display control unit 34 turns on a print LED. The print LED turned on at this time is, e.g., an LED provided as an outer edge of the print button 3102.

Subsequently, in step S234, the receiving unit 32 of the handheld printer 3 receives an operation performed by the user to determine the initial position of the handheld printer 3 to start operation of the handheld printer 3. In step S235, the receiving unit 32 receives an operation performed by the user on the print button 3102 of the handheld printer 3. Note that the processing in steps S234 and S235 is substantially the same as the processing in steps S123 and S124 described above.

Thereafter, in step S236, the print executing unit 38 executes printing (i.e., discharging a printing agent) by freehand scanning. In other words, the print executing unit 38 executes printing while the user freely moves the handheld printer 3 by hand. The processing in step 236 is substantially the same as the processing in step S125 described above.

Now, a description is given of determination related to job cancellation at the time of accumulated printing. When the handheld printer 3 detects a cancelling operation performed by the user to cancel the accumulated job in the process of printing by freehand scanning, in step S237, the determining unit 35 determines whether to cancel the accumulated job.

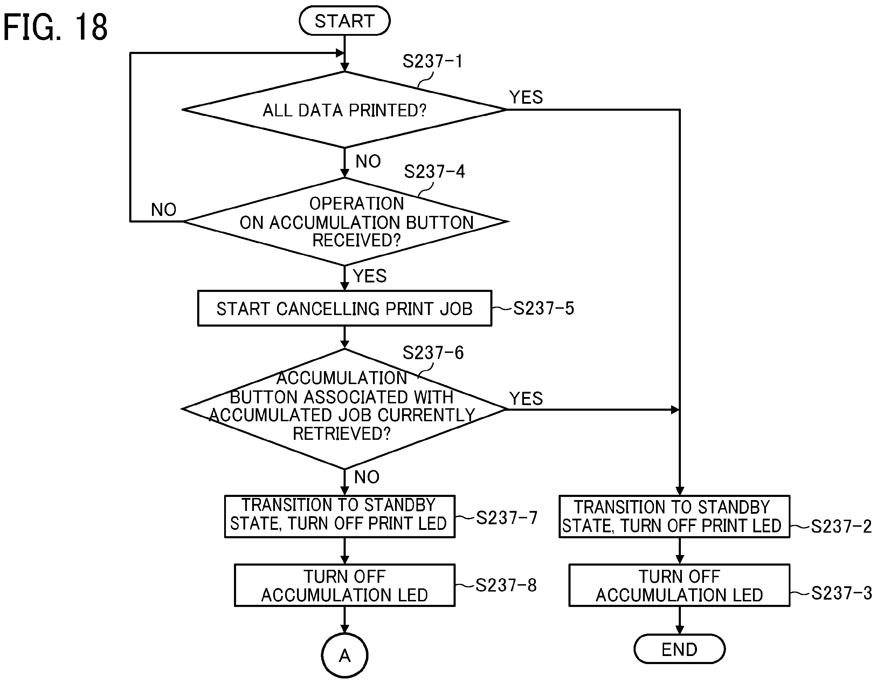

Referring now to FIG. 18, a detailed description of the determination.

FIG. 18 is a flowchart illustrating a process of determining whether to cancel an accumulated job.

First, in step S237-1, the determining unit 35 determines whether all data is printed for the given accumulated job (e.g., Accumulated job 1) that is in the process of printing.

When the determining unit 35 determines that all the data is printed for the given accumulated job that is in the process of printing (YES in step S237-1), in step S237-2, the print executing unit 38 causes the handheld printer 3 to transition to the standby state and turns off the print LED in cooperation with the display control unit 34.

In step S237-3, the display control unit 34 turns off the accumulation LED associated with the number of the given accumulated job for which the cancelling operation is performed. Thus, the flow illustrated in FIG. 18 ends. In this case, the given accumulated job is completed without being cancelled. Although the print LED is turned off in step S237-2 and the accumulation LED is turned off in step S237-3 in the flow illustrated in FIG. 18, the accumulation LED may be turned off before the print LED is turned off.

By contrast, when the determining unit 35 determines that not all the data is printed for the given accumulated job that is in the process of printing (NO in step S237-1), in step S237-4, the determining unit 35 further determines whether the receiving unit 32 has received an operation on one of the accumulation buttons 3103, in other words, whether one of the accumulation buttons 3103 is operated.

When the determining unit 35 determines that any of the accumulation buttons 3103 has not been operated (NO in step S237-4), the processing unit 36 returns to the processing in step S237-1. By contrast, when the determining unit 35 determines that one of the accumulation buttons 3103 has been operated (YES in step S237-4), in step S237-5, the print executing unit 38 starts cancelling the given accumulated job (i.e., print job) that is in the process of printing, in other words, the print executing unit 38 stops the accumulated job from printing.

Subsequently, in step S237-6, the determining unit 35 determines whether the accumulation button 3103 operated is an accumulation button associated with the number of the given accumulated job (e.g., Accumulated job 1) that is in the process of printing. When the determining unit 35 determines that the accumulation button 3103 operated is an accumulation button associated with the number of the given accumulated job that is in the process of printing (YES in step S237-6), in step S237-2, the print executing unit 38 causes the handheld printer 3 to transition to the standby state and turns off the print LED in cooperation with the display control unit 34. In other words, when the accumulation button 3103 associated with the given print job is operated while the given print job is in the process of printing, the print executing unit 38 stops the given print job from printing.

In step S237-3, the display control unit 34 turns off the accumulation LED associated with the number of the given accumulated job cancelled. Thus, the flow illustrated in FIG. 18 ends.

By contrast, the determining unit 35 determines that the accumulation button 3103 operated is not an accumulation button associated with the number of the given accumulated job that is in the process of printing (NO in step S237-6), in step S237-7, the print executing unit 38 cancels the accumulated job that is in the process of printing and causes the handheld printer 3 to transition to the standby state; whereas the display control unit 34 turns off the print LED.

Subsequently, in step S237-8, the display control unit 34 turns off the accumulation LED associated with the number of the accumulated job cancelled. The processing unit 36 proceeds to circle A illustrated in FIG. 18 as subsequent processing, thus exiting the flow illustrated in FIG. 18. In other words, when the accumulation button 3103 (e.g., the accumulation button 3103 associated with Accumulated job 2) other than the accumulation button 3103 associated with the given print job is operated while the given print job is in the process of printing, the print executing unit 38 stops the given print job from printing and allows printing of the print job associated with the accumulation button 3103 operated. In other words, the print executing unit 38 stops the given print job as a first print job from printing and allow printing of a second print job of the at least one print job accumulated, in response to one of the at least one accumulation button 3103 associated with the second print job being operated while the given print job is in the process of printing.

Note that the circle A to which the processing unit 36 proceeds corresponding to the processing in step S232 described above with reference to FIG. 17. Specifically, the processing unit 36 cooperates with the print executing unit 38 to retrieve the accumulated job having the number associated with the accumulation button 3103 operated. The processing unit 36 cooperates with the display control unit 34 to turn on the accumulation LED associated with the accumulation button 3103 operated. Although the print LED is turned off in step S237-7 and the accumulation LED is turned off in step S237-8 in the flow illustrated in FIG. 18, the accumulation LED may be turned off before the print LED is turned off.

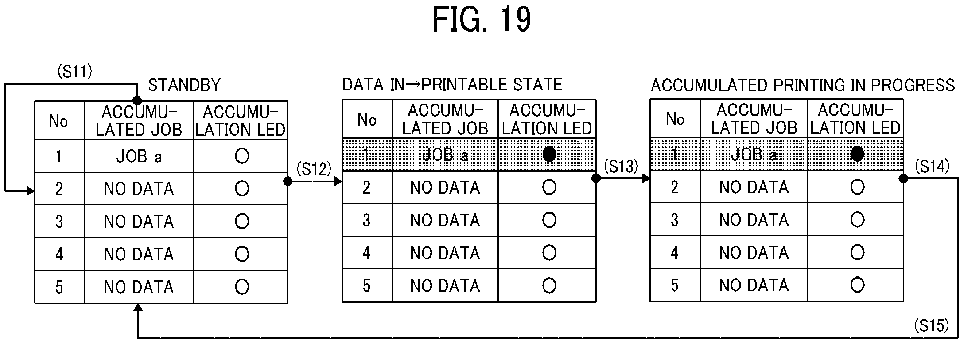

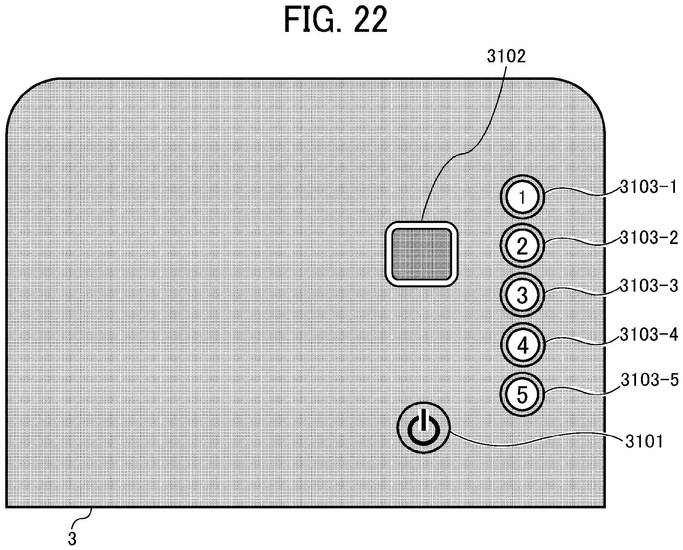

Referring now to FIGS. 19 and 22, a description is given of transition of state of the handheld printer 3 in an accumulated-job printing process in a case where the number of accumulated jobs is one.

FIG. 19 is an illustration of the state transition in the accumulated-job printing process. FIG. 22 is a diagram illustrating an example of buttons on the handheld printer 3.

In FIG. 22, the power button 3101, the print button 3102, and the at least one accumulation button 3103 are disposed on a side of the handheld printer 3. In the present example, accumulation buttons 3103-1 to 3103-5 are disposed. The LEDs are disposed as the respective outer edges of the print button 3102 and the at least one accumulation button 3103. The display control unit 34 turns on, blinks, and turns off the LEDs according to the state related to printing of the handheld printer 3. The display control unit 34 may control the colour of light emitted from the LEDs, the light emission time, the light emission interval, and the states of lighting and blinking of the LEDs according to the type, contents, and printing state of the accumulated job, for example.

In FIG. 19, the handheld printer 3 is in a state in which an accumulated job (JOB a) corresponding to Accumulation No. 1 is accumulated alone in a given area of the built-in memory, without any other accumulated jobs. In short, in step S11, the handheld printer 3 is in a standby state as a printing apparatus. In this state, a user operates one of the accumulation buttons 3103-2 to 3103-5 illustrated in FIG. 22. However, in this case, since the accumulation button 3103-1 associated with the print job accumulated is not operated, the handheld printer 3 ignores the operation performed by the user.

By contrast, when, in step S12, the user operates the accumulation button 3103-1 on the handheld printer 3, the receiving unit 32 receives the operation on the accumulation button 3103-1. Thereafter, the print executing unit 38 retrieves the accumulated job (JOB a) corresponding to Accumulation No. 1 from the given area of the built-in memory. Thus, the state of the handheld printer 3 transitions to a printable state, which may be referred to as a ready state.

Thereafter, when the user operates the print button 3102, the receiving unit 32 receives the operation on the print button 3102. In response, in step S13, the print executing unit 38 starts the accumulated job (JOB a).

In this state, when the user operates the print button 3102, when the user lifts up the body of the handheld printer 3 from the recording medium 70, or when an image to be printed is completely printed, for example, in step S14, the print executing unit 38 finishes printing.

When the printing is finished, in step S15, the display control unit 34 turns off the accumulation LED that has been turned on in correspondence with the accumulated job (JOB a). The above is an example of transition of state of the handheld printer 3 in the printing process of the accumulated job (JOB a).

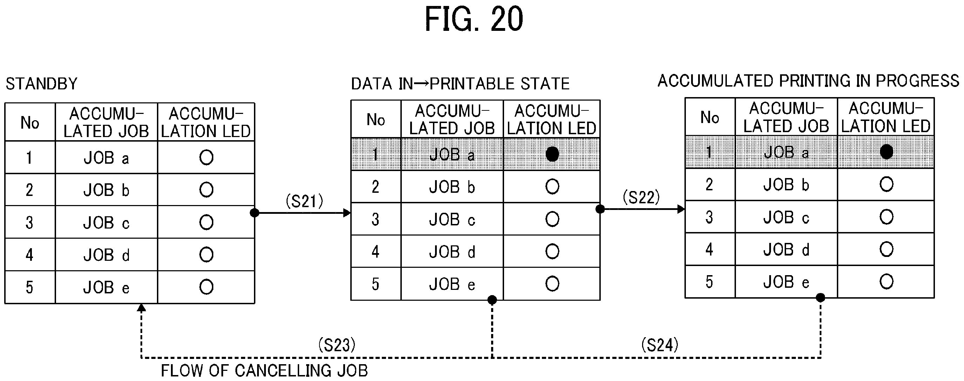

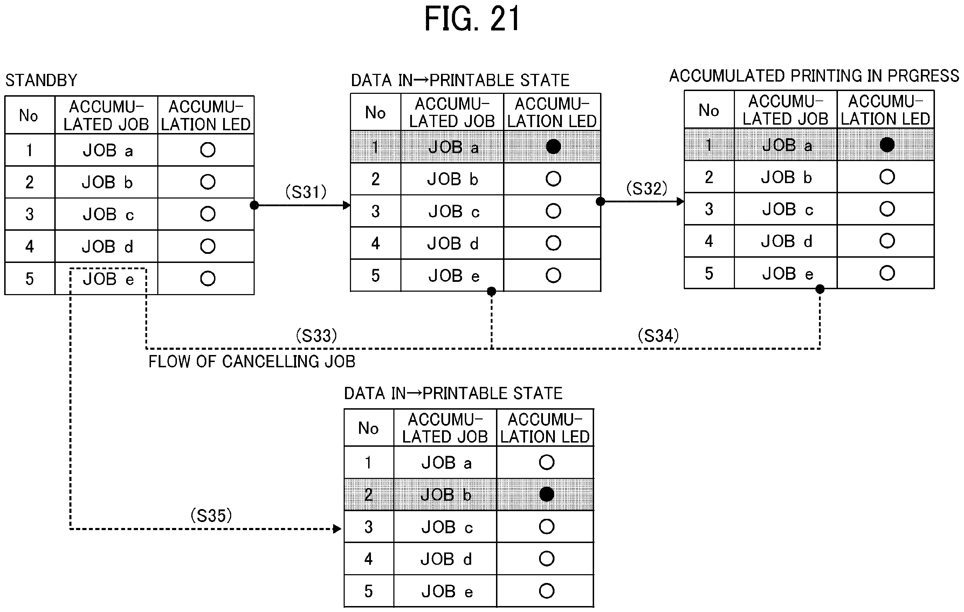

Note that, in FIG. 19, for the sake of simplicity, black circles indicate that the accumulation LED is turned on; whereas white circles indicate that the accumulation LEDs are turned off. Alternatively, the white circles may indicate that the accumulation LED is turned on; whereas the black circles may indicate that the accumulation LEDs are turned off. The same applies to FIGS. 20 and 21.

Referring now to FIGS. 20 and 22, a description is given of transition of state of the handheld printer 3 in an accumulated-job cancelling process in a case where the number of accumulated jobs is one.

FIG. 20 is an illustration of state transition at the time of cancelling a job in a case where the number of accumulated jobs is one.

In FIG. 20, the handheld printer 3 is in a state in which an accumulated job (JOB a) corresponding to Accumulation No. 1 is accumulated alone in a given area of the built-in memory, without any other accumulated jobs corresponding to other accumulation numbers. In short, the handheld printer 3 is in the standby state as a printing apparatus. In this state, when, in step S21, a user operates the accumulation button 3103-1 on the handheld printer 3 illustrated in FIG. 22, the receiving unit 32 receives the operation on the accumulation button 3103-1. Thereafter, the print executing unit 38 retrieves the accumulated job (JOB a) corresponding to Accumulation No. 1 from the given area of the built-in memory. Thus, the state of the handheld printer 3 transitions to the printable state (i.e., ready state).

When the user operates the print button 3102 in the printable state of the handheld printer 3 resulting from step S21, the receiving unit 32 receives the operation on the print button 3102. In response, in step S22, the print executing unit 38 starts the accumulated job (JOB a). Thus, the state of the handheld printer 3 transitions to a state of accumulated printing in progress.

By contrast, when the user operates the accumulation button 3103-1 in the printable state of the handheld printer 3 resulting from step S21, the receiving unit 32 receives the operation on the accumulation button 3103-1. Thereafter, in step S23, the print executing unit 38 causes the handheld printer 3 to transition from the printable state to the standby state.

When the user operates the accumulation button 3103-1 in the state of accumulated printing in progress resulting from step S22, the receiving unit 32 receives the operation on the accumulation button 3103-1. Thereafter, in step S24, the print executing unit 38 finishes printing and causes the handheld printer 3 to transition from the state of accumulated printing in progress to the standby state. In addition, the display control unit 34 turns off the accumulation LED that has been turned on in correspondence with the accumulated job (JOB a). The above is an example of the transition of state of the handheld printer 3 in the process of cancelling the accumulated job (JOB a) in a case where the number of accumulated jobs is one. In step S23 or S24, the accumulated job (JOB a) corresponding to Accumulation No. 1 is not cancelled when the user operates any one of the accumulation buttons 3103 (in this case, any one of the accumulation buttons 3103-2 to 3103-5) other than the accumulation button 3103-1.

Now, a description is given of the relationship between the accumulation button 3103 operated by the user and a given accumulated job that is in the process of printing, together with a function of cancelling the given accumulated job. In the present embodiment, at least one print job registered by the information processor 2 is stored in a given area of the built-in memory of the handheld printer 3 as at least one accumulated job to which a specific accumulation number is assigned. Each accumulated job stored in the given area of the built-in memory is associated with an individual number, which may be a virtual number given by software processing, of the at least one accumulation button 3103 disposed on the body of the handheld printer 3. In the example illustrated in FIG. 22, each of the numbers 1 to 5 of the accumulation buttons 3103-1 to 3103-5 represents the individual number associated with the corresponding accumulated job. In other words, the at least one accumulation button 3103 is associated with the at least one accumulated job stored in the given area of the built-in memory on a one-to-one basis.

Such a configuration allows the print executing unit 38 to control the recording head control circuit 354 to cancel a given accumulated job that is currently in the process of printing, in response to an operation performed on one of the accumulation buttons 3103 while the given accumulated job is in the process of printing. In addition, depending on whether the operated accumulation button 3103 of the at least one accumulation button 3103 is an accumulation button associated with the print job that is in the process of printing, the print executing unit 38 may cancel the accumulated job (i.e., the print job that is in the process of printing) and cause the handheld printer 3 to transition to the printable state to be ready for execution of another accumulated job.

The difference between step S23 and step S24 is the time when the user cancels the print job. Specifically, in the step S23, the user cancels the accumulated job before the accumulated job starts printing. In short, the user cancels printing in advance. On the other hand, in step S24, the user cancels the accumulated job after starting the accumulated job because, for example, the user notices in the process of printing that the number or contents of the accumulated job started is wrong. In short, the user cancels printing while the accumulated job is in the process of printing. Even in the case of step S24, the present embodiment allows the user to cancel, immediately at a desired time, the accumulated job that is currently in the process of printing.

Referring now to FIG. 21, a description is given of transition of state of the handheld printer 3 in an accumulated-job cancelling process in a case where the number of accumulated jobs is two or more.

FIG. 21 is an illustration of state transition at the time of cancelling a job in a case where the number of accumulated jobs is two or more.

In FIG. 21, the handheld printer 3 is in a state in which accumulated jobs (JOB a to JOB e) corresponding to Accumulation No. 1 to No. 5 are accumulated in a given area of the built-in memory. In short, the handheld printer 3 is in the standby state as a printing apparatus. In this state, when, in step S31, a user operates the accumulation button 3103-1 on the handheld printer 3 illustrated in FIG. 22, the receiving unit 32 receives the operation on the accumulation button 3103-1. Thereafter, the print executing unit 38 retrieves the accumulated job (JOB a) corresponding to Accumulation No. 1 from the given area of the built-in memory. Thus, the state of the handheld printer 3 transitions to the printable state (i.e., ready state).

In response to the user operating the print button 3102 in the printable state of the handheld printer 3 resulting from step S31, in step S32, the print executing unit 38 starts the accumulated job (JOB a). Thus, the state of the handheld printer 3 transitions to the state of accumulated printing in progress.

By contrast, when the user operates the accumulation button 3103 (e.g., the accumulation button 3103-2) other than the accumulation button 3103-1 in the printable state of the handheld printer 3 resulting from step S31, the receiving unit 32 receives the operation on the accumulation button 3103 other than the accumulation button 3103-1. Thereafter, in step S33, the print executing unit 38 finishes printing and causes the handheld printer 3 to transition from the printable state to the standby state.

When the user operates the accumulation button 3103 (e.g., the accumulation button 3103-2) other than the accumulation button 3103-1 in the state of accumulated printing in progress resulting from step S32, the receiving unit 32 receives the operation on the accumulation button 3103 other than the accumulation button 3103-1. Thereafter, in step S34, the print executing unit 38 finishes printing and causes the handheld printer 3 to transition from the state of accumulated printing in progress to the standby state. In addition, the display control unit 34 turns off the accumulation LED that has been turned on in correspondence with the accumulated job (JOB a).

When the user operates the accumulation button 3103-2 in steps S33 and S34, in step S35, the print executing unit 38 retrieves the accumulated job (JOB b) associated with the operated accumulation button 3103-2 from the given area of the built-in memory. In other words, when the number of accumulated jobs is two or more and an accumulation button associated with an accumulated job other than a selected accumulated job is operated in the printable state in which the selected accumulated job is printable or in the state of accumulated printing in progress in which the selected accumulated job is in the process of printing, the print executing unit 38 stops the selected print job from printing and causes the handheld printer 3 to transition to the printable state to be ready for execution of the accumulated job other than the selected accumulated job. The above is an example of the transition of state of the handheld printer 3 in the process of cancelling an accumulated job in a case where the number of accumulated jobs is two or more.

The embodiment described above obviates the need to follow a procedure of selecting a print job to be executed and then starting the selected print job, which has been necessary between a typical information processor and a typical handheld printer each time when printing is executed. Accordingly, the embodiment eliminates a lead time taken in a case where the user wants to use the handheld printer immediately after turning on the power of the handheld printer or a case where the user wants to repeatedly execute the same print job at certain work intervals.

When an accumulated job is cancelled in the process of printing, the transceiver unit 31 of the handheld printer 3 may transmit, to the information processor 2, e.g., a message or an image indicating that the accumulated job has been cancelled in the process of printing. In other words, such a message or an image indicating that the print job corresponding to the accumulated job has been cancelled may be displayed on the display 206 of the information processor 2. Accordingly, for example, even in a case where a user who uses the print application on the information processor 2 is different from a user who uses the handheld printer 3, the users recognize at substantially the same time that the print job in the process of printing has been cancelled.

As described above, according to the present embodiment, when a print operation is performed for a given print job of at least one print job accumulated by the information processor 2, the handheld printer 3 starts the given print job (in step S236). When any one of the accumulation buttons 3103 is operated while the given print job is in the process of printing, the handheld printer 3 stops the given print job from printing (in step S237). Accordingly, in a case where a user wants to execute a print job instead of the given print job that is currently in the process of printing, the user does not have to wait for the given print job to be completed.

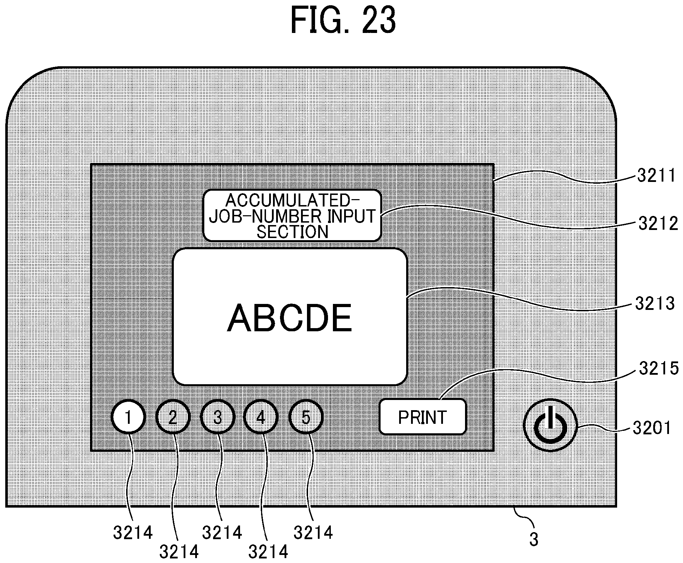

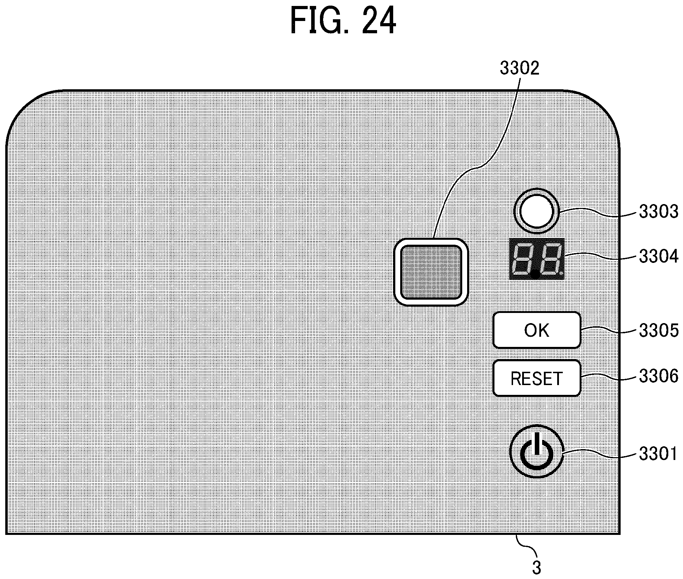

Referring now to FIGS. 23 and 24, a description is given of a modification of the embodiment described above.

FIG. 23 is a diagram illustrating an example of accumulation buttons on a liquid crystal screen of a handheld printer according to a modification of the embodiment.

As illustrated in FIG. 23, a power button 3201 and a liquid crystal screen 3211 are disposed on a side of the handheld printer 3. The display control unit 34 displays, on the liquid crystal screen 3211, an accumulated-job-number input section 3212, a print information display section 3213, at least one accumulated-job-number display icon 3214, and a print button 3215.

The accumulated-job-number input section 3212 has a function similar to the function of the accumulation button 3103 in the embodiment described above. A user inputs the number given to a desired accumulated job into the accumulated-job-number input section 3212 to enjoy the function similar to the function of the accumulation button 3103. The user may input, into the accumulated-job-number input section 3212, an accumulated-job name instead of the number. The user inputs, e.g., an accumulated-job name or the number associated with a given print job registered by the information processor 2 to set a desired print job. According to the present modification, the accumulated-job-number input section 3212 displayed on the liquid crystal screen 3211 of the handheld printer 3 functions as another accumulation receiver.

The print information display section 3213 displays an image to be actually printed on the recording medium 70 according to the desired print job. The display control unit 34 may display, on the print information display section 3213, a thumbnail of the image to be printed. In a case where there is a plurality of images to be printed on a plurality of sheets of paper, the display control unit 34 may display a thumbnail of a representative image of the plurality of images, such as a cover of a file that includes the plurality of images. The print information display section 3213 in the liquid crystal screen 3211 of the handheld printer 3 allows the user to ascertain in advance the image to be printed on a recording medium in detail at an earlier stage.

The accumulated-job-number display icon 3214 is displayed corresponding to the accumulated-job-number input section 3212. Specifically, the display control unit 34 displays the accumulated-job-number display icon 3214 having a number corresponding to a number given to the accumulated-job-number input section 3212 such that the accumulated-job-number display icon 3214 thus displayed is distinguishable from the other accumulated-job-number display icons 3214 having the other numbers.

FIG. 24 is a diagram illustrating another example of accumulation buttons on the handheld printer according to the modification of the embodiment.

As illustrated in FIG. 24, a side of the handheld printer 3 is provided with a power button 3301, a print button 3302, an accumulation button 3303, an accumulated-job-number display counter 3304, an okay (OK) button 3305, and a reset button 3306. Among the buttons and the counter, the accumulation button 3303 is, e.g., a counter switch. The number of times the user operates the accumulation button 3303 is displayed as a number on the accumulated-job-number display counter 3304. In the example illustrated in FIG. 24, since the accumulated-job-number display counter 3304 is displayed by seven segments of two digits, 99 accumulated jobs from 01 to 99 can be set. The number of accumulated jobs may be changed as appropriate for, e.g., the capacity of the built-in memory of the handheld printer 3.

The OK button 3305 and the reset button 3306 are used to determine whether to set the number displayed in response to the operation on the accumulation button 3303. When the number displayed is correct, the user operates the OK button 3305. In response, the accumulated job associated with the number thus set is selected and stored. By contrast, when the user operates the reset button 3306, the accumulated-job-number display counter 3304 is reset to "00." Such a configuration allows the user to easily correct an erroneous counting operation on the counter switch. The arrangement of the buttons and the counter illustrated in FIG. 24 allows the user to operate the accumulation button 3303 with, e.g., the thumb alone. In other words, the user can input a desired accumulated-job number without changing the way of holding the handheld printer 3.

As described above, according to the modification, variations are given particularly to the input and display ways relative to the accumulation buttons. In addition to the advantages of the embodiment, the modification makes it easy for the user to operate the handheld printer at the time of inputting an accumulated job and to ascertain the contents of the accumulated job.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A printing apparatus (3) for printing print data on a recording medium, the printing apparatus (3) comprising:
a receiver (31) configured to receive at least one print job transmitted by an information processing apparatus that communicates with the printing apparatus (3);
at least one accumulation receiver (3103) associated with the at least one print job received and accumulated; and
a print executer (38) configured to:
print a given print job of the at least one print job accumulated, in response to a print operation of the given print job; and
stop the given print job from printing, in response to any one of the at least one accumulation receiver (3103) being operated while the given print job is in process of printing.

2. The printing apparatus (3) according to claim 1,
wherein the print executer (38) is configured to stop the given print job from printing, in response to one of the at least one the accumulation receiver (3103) associated with the given print job being operated while the given print job is in the process of printing.

3. The printing apparatus (3) according to claim 1,
wherein the print executer (38) is configured to stop the given print job as a first print job from printing and allow printing of a second print job of the at least one print job accumulated, in response to one of the at least one accumulation receiver (3103) associated with the second print job being operated while the given print job is in the process of printing.

4. The printing apparatus (3) according to any one of claims 1 to 3,
wherein the at least one accumulation receiver (3103) includes at least one button disposed on the printing apparatus (3) or an accumulated-job-number input section (3212) displayed on a liquid crystal screen (3211) of the printing apparatus (3).

5. The printing apparatus (3) according to any one of claims 1 to 4,
wherein the printing apparatus (3) includes a handheld printer configured to be manually held to move on the recording medium.

6. An information processing system (1) comprising:
an information processing apparatus (2); and
a printing apparatus (3) configured to:
print print data on a recording medium; and
communicate with the information processing apparatus (2),
the printing apparatus (3) including:
a receiver (31) configured to receive at least one print job transmitted by the information processing apparatus (2);
at least one accumulation receiver (3103) associated with the at least one print job received and accumulated; and
a print executer (38) configured to:
print a given print job of the at least one print job accumulated, in response to a print operation of the given print job; and
stop the given print job from printing, in response to any one of the at least one accumulation receiver (3103) being operated while the given print job is in process of printing.

7. A printing method executed by a printing apparatus that prints print data on a recording medium, the method comprising:
(S216) receiving at least one print job transmitted by an information processing apparatus that communicates with the printing apparatus;
(S231) receiving an operation on at least one accumulation receiver associated with the at least one print job received and accumulated;
(S236) printing a given print job of the at least one print job accumulated, in response to a print operation of the given print job; and
(S237-5) stopping the given print job from printing, in response to any one of the at least one accumulation receiver being operated while the given print job is in process of printing.

8. A carrier means carrying computer readable code for controlling a computer system to carry out the method of claim 7.
